(19) Europäisches Patentamt / European Patent Office / Office européen des brevets

(11) EP 3 677 653 A1

(12) **EUROPEAN PATENT APPLICATION**
published in accordance with Art. 153(4) EPC

(43) Date of publication:
**08.07.2020 Bulletin 2020/28**

(21) Application number: **17923702.9**

(22) Date of filing: **29.08.2017**

(51) Int Cl.:
***C09D 101/02*** *(2006.01)* ***C09K 3/00*** *(2006.01)*

(86) International application number:
**PCT/JP2017/030912**

(87) International publication number:
**WO 2019/043782 (07.03.2019 Gazette 2019/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Oji Holdings Corporation**
**Chuo-ku**
**Tokyo 104-0061 (JP)**

(72) Inventors:
- **AIZAWA, Emi**
  **Tokyo 104-0061 (JP)**
- **YAMAMOTO, Hiroki**
  **Tokyo 104-0061 (JP)**
- **TANAKA, Rina**
  **Tokyo 104-0061 (JP)**
- **FUSHIMI, Hayato**
  **Tokyo 104-0061 (JP)**
- **YAMANE, Kazuo**
  **Tokyo 104-0061 (JP)**

(74) Representative: **Godemeyer Blum Lenze**
**Patentanwälte**
**Partnerschaft mbB - werkpatent**
**An den Gärten 7**
**51491 Overath (DE)**

(54) **FIBROUS-CELLULOSE-CONTAINING COMPOSITION AND COATING**

(57) It is an object of the present invention to provide a cellulose fiber-containing composition and a cellulose fiber-containing paint, the particles (aggregates) of which are suppressed in coated products. According to the present invention, provided is a cellulose fiber-containing composition comprising cellulose fibers having a fiber width of 1000 nm or less and water, wherein the image clarity (comb width: 0.125 mm) of a coating film obtained from the following conditions is 55% or more:
(Conditions)
the cellulose fiber-containing composition, an acrylic resin in an amount of 156 parts by weight based on 1 part by weight of the cellulose fibers, and isocyanate in an amount of 44 parts by weight based on 1 part by weight of the cellulose fibers, are mixed with one another to obtain a coating solution, which is then applied onto a smooth polyethylene terephthalate plate to a thickness of 30 μm, using an applicator, and immediately after the application of the coating solution, it is dried at 80°C for 30 minutes.

EP 3 677 653 A1

## Description

### Technical Field

The present invention relates to a cellulose fiber-containing composition and a cellulose fiber-containing paint.

### Background Art

In recent years, because of enhanced awareness of alternatives to petroleum resources and environmental consciousness, there has been a focus on materials utilizing reproducible natural fibers. Among natural fibers, cellulose fibers having a fiber diameter of 10 μm or more and 50 μm or less, in particular, wood-derived cellulose fibers (pulp) have been widely used mainly as paper products so far.

Ultrafine cellulose fibers, which have a fiber diameter of 1 μm or less, have also been known as cellulose fibers. Such ultrafine cellulose fibers have attracted attention as a novel material, and the intended use thereof has been highly diversified. For example, the development of sheets, resin composites, and thickeners, each comprising ultrafine cellulose fibers, has been promoted.

In addition, application of cellulose fibers to paints has been studied. Patent Document 1 discloses an aqueous coating composition comprising cellulose fibers having a number average fiber diameter of 2nm or more and 500 nm or less, an aqueous resin, and a coloring agent.

### Prior Art Document

### Patent Document

Patent Document 1: Japanese Patent-A-2016-69618

### Summary of Invention

### Object to be Solved by the Invention

The present inventors have studied the use of ultrafine cellulose fibers as a thickener in paints. However, it has been found that when ultrafine cellulose fibers are comprised in paints, there is a room for improvement in particles (aggregates) in coated products. It is an object of the present invention to provide a cellulose fiber-containing composition and a paint, the particles (aggregates) of which are suppressed in coated products.

### Means for Solving the Object

As a result of intensive studies directed towards achieving the aforementioned object, the present inventors have found that the particles (aggregates) of a cellulose fiber-containing composition in coated products can be suppressed by regulating the image clarity of a coating film obtained under predetermined conditions. The present invention has been completed based on these findings.

The present invention has the following configurations.

[1] A cellulose fiber-containing composition comprising cellulose fibers having a fiber width of 1000 nm or less and water, wherein
the image clarity (comb width: 0.125 mm) of a coating film obtained from the following conditions is 55% or more:
(Conditions)
the cellulose fiber-containing composition, an acrylic resin in an amount of 156 parts by weight based on 1 part by weight of the cellulose fibers, and isocyanate in an amount of 44 parts by weight based on 1 part by weight of the cellulose fibers, are mixed with one another to obtain a coating solution, which is then applied onto a smooth polyethylene terephthalate plate to a thickness of 30 μm, using an applicator, and immediately after the application of the coating solution, it is dried at 80°C for 30 minutes.

[2] The cellulose fiber-containing composition according to [1], wherein the image clarity is 65% or more and 98% or less.

[3] The cellulose fiber-containing composition according to [1] or [2], wherein the total amount of the cellulose fibers and the water is 90% by mass or more based on the amount of the entire composition.

[4] The cellulose fiber-containing composition according to any one of [1] to [3], wherein when the solid concentration

of the cellulose fibers is set at 0.4% by mass, the viscosity measured under conditions of 23°C and a rotation number of 3 rpm is 40,000 mPa·s or less.

[5] The cellulose fiber-containing composition according to any one of [1] to [4], wherein when the cellulose fibers are processed into a dispersed solution and a supernatant separated from the dispersed solution under the following conditions is recovered, the supernatant yield is 80% by mass or more:

(Conditions)

a dispersed solution of cellulose fibers is adjusted to a solid concentration of 0.2% by mass, and is then centrifuged using a high speed refrigerated centrifuge under conditions of 12000 G for 10 minutes, and thereafter, the obtained supernatant is recovered and the solid concentration of the supernatant is then measured, and the yield of the cellulose fibers is obtained according to the following equation:

$$\text{supernatant yield (\%)} = \text{solid concentration (\%) in supernatant} / 0.2 \times 100$$

[6] The cellulose fiber-containing composition according to any one of [1] to [5], wherein the Young's modulus of a coating film obtained from the following conditions is 0.7 GPa or more:

(Conditions)

the cellulose fiber-containing composition, an acrylic resin in an amount of 156 parts by weight based on 1 part by weight of the cellulose fibers, and isocyanate in an amount of 44 parts by weight based on 1 part by weight of the cellulose fibers, are mixed with one another to obtain a coating solution, which is then applied onto a smooth polypropylene plate to a thickness of 30 μm, using an applicator, and immediately after the application of the coating solution, it is dried at 80°C for 30 minutes.

[7] The cellulose fiber-containing composition according to any one of [1] to [6], further comprising an enzyme.

[8] The cellulose fiber-containing composition according to any one of [1] to [7], which is for use in a paint.

[9] The cellulose fiber-containing composition according to any one of [1] to [7], which is for use in a thickener.

[10] A paint comprising the cellulose fiber-containing composition according to any one of [1] to [9].

Advantageous Effects of Invention

According to the present invention, a cellulose fiber-containing composition and a cellulose fiber-containing paint, the particles (aggregates) of which are suppressed in coated products, can be provided.

Brief Description of Drawings

Figure 1 is a graph showing the relationship between the amount of NaOH added dropwise to a fiber raw material having a phosphoric acid group and the electrical conductivity.

Figure 2 is a graph showing the relationship between the amount of NaOH added dropwise to a fiber raw material having a carboxyl group and the electrical conductivity.

Embodiments of Carrying out the Invention

Hereinafter, the present invention will be described in detail. The description for components described below will be based on representative embodiments or specific examples; however, the present invention will not be limited to such embodiments.

The cellulose fiber-containing composition of the present invention is a cellulose fiber-containing composition comprising cellulose fibers having a fiber width of 1000 nm or less and water, wherein the image clarity (comb width: 0.125 mm) of a coating film obtained from the following conditions is 55% or more.

(Conditions)

The above-described cellulose fiber-containing composition, an acrylic resin in an amount of 156 parts by weight based on 1 part by weight of the above-described cellulose fibers, and isocyanate in an amount of 44 parts by weight based on 1 part by weight of the above-described cellulose fibers, are mixed with one another to obtain a coating solution, which is then applied onto a smooth polyethylene terephthalate plate to a thickness of 30 μm, using an applicator, and immediately after the application of the coating solution, it is dried at 80°C for 30 minutes.

With regard to the cellulose fiber-containing composition of the present invention, the above-described image clarity is not particularly limited, as long as it is 55% or more. The image clarity is preferably 60% or more, more preferably 65% or more, further preferably 70% or more, and particularly preferably 75% or more. The upper limit of the image clarity is not particularly limited, and it is practically 98% or less.

The image clarity applied in the present invention is a value measured in accordance with JIS K 7374:2007 that is described in the Examples later. The reason why, in the present invention, the particles (aggregates) of the cellulose fiber-containing composition in coated products are suppressed by determining the image clarity of the coating film of the cellulose fiber-containing composition is unknown, but it is assumed as follows. The image clarity applied in the present invention can be an indicator for indicating the ability of a thickener to uniformly disperse other components with a specific numerical value. It is considered that a paint having few aggregates can be realized by highly adjusting the composition used as a thickener, based on such an indicator.

The method of controlling the image clarity of a coating film within the above-described range is not particularly limited. Examples of the control method may include an aspect of adding a specific component(s) which are exemplified below in a predetermined amount and an aspect of treating ultrafine cellulose fibers with an enzyme under specific conditions. Another example of the control method may be selection of the order of adding components to be mixed into a paint. For example, there may be applied an aspect, in which a composition comprising ultrafine cellulose fibers and a specific component(s) is prepared and this composition is then mixed with a resin and/or a hardening agent, etc.

(Cellulose fibers)

The cellulose fiber-containing composition of the present invention comprises ultrafine cellulose fibers. The ultrafine cellulose fibers are preferably fibers having ionic substituents, and in this case, the ionic substituents are preferably anionic substituents (hereinafter also referred to as "anionic groups"). The anionic group is preferably at least one selected from, for example, a phosphoric acid group or a phosphoric acid group-derived substituent (which is simply referred to as a "phosphoric acid group" at times), a carboxyl group or a carboxyl group-derived substituent (which is simply referred to as a "carboxyl group" at times), and a sulfone group or a sulfone group-derived substituent (which is simply referred to as a "sulfone group" at times). The anionic group is more preferably at least one selected from a phosphoric acid group and a carboxyl group; and is particularly preferably a phosphoric acid group.

Although there is no particular restriction on a cellulose fiber raw material for obtaining ultrafine cellulose fibers, pulp is preferably used from the viewpoint of availability and inexpensiveness. Examples of the pulp may include wood pulp, non-wood pulp, and deinked pulp. Examples of the wood pulp may include chemical pulps such as leaf bleached kraft pulp (LBKP), needle bleached kraft pulp (NBKP), sulfite pulp (SP), dissolving pulp (DP), soda pulp (AP), unbleached kraft pulp (UKP), and oxygen bleached kraft pulp (OKP). Further, included are, but not particularly limited to, semichemical pulps such as semi-chemical pulp (SCP) and chemi-ground wood pulp (CGP), and mechanical pulps such as ground pulp (GP) and thermomechanical pulp (TMP, BCTMP). Examples of the non-wood pulp may include, but not particularly limited to, cotton pulps such as cotton linter and cotton lint; non-wood type pulps such as hemp, wheat straw, and bagasse; and cellulose isolated from ascidian, seaweed, etc., chitin, and chitosan. As a deinked pulp, there is deinked pulp using waste paper as a raw material, but it is not particularly limited thereto. The pulp of the present embodiment may be used singly, or in combination of two or more types. Among the above-listed pulp types, wood pulp and deinked pulp including cellulose are preferable from the viewpoint of easy availability. Among wood pulps, chemical pulp is preferable because it has a higher cellulose content to enhance the yield of ultrafine cellulose fibers and decomposition of cellulose in the pulp is mild at the time of fibrillation (defibration) to yield ultrafine cellulose fibers having a long fiber length with a high aspect ratio. Among them, kraft pulp and sulfite pulp are most preferably selected. A film containing the ultrafine cellulose fibers having a long fiber length with a high aspect ratio tends to exhibit a high strength.

The average fiber width of ultrafine cellulose fibers is 1000 nm or less as observed with an electron microscope. The average fiber width is preferably 2 nm or more and 1000 nm or less, more preferably 2 nm or more and less than 1000 nm, even more preferably 2 nm or more and 100 nm or less, further preferably 2 nm or more and 50 nm or less, and still further preferably 2 nm or more and 10 nm or less, but is not particularly limited thereto. When the average fiber width of ultrafine cellulose fibers is less than 2 nm, since they are dissolved in water as cellulose molecules, there appears tendency that the physical properties (strength, rigidity, and dimensional stability) as an ultrafine cellulose fiber are not expressed sufficiently. The ultrafine cellulose fiber is, for example, monofilament cellulose having a fiber width of 1000 nm or less.

The measurement of a fiber width of an ultrafine cellulose fiber by electron microscopic observation is carried out as follows. An aqueous suspension of the ultrafine cellulose fibers having a concentration of 0.05% by mass or more and 0.1% by mass or less is prepared, and the suspension is casted onto a hydrophilized carbon film-coated grid as a sample for TEM observation. If the sample contains wide fibers, SEM images of the surface of the suspension casted onto glass may be observed. The sample is observed using electron microscope images taken at a magnification of 1000x, 5000x, 10000x, or 50000x according to the widths of the constituent fibers. However, the sample, the observation

conditions, and the magnification are adjusted so as to satisfy the following conditions:

(1) A single straight line X is drawn in any given portion in an observation image, and 20 or more fibers intersect with the straight line X.

(2) A straight line Y, which intersects perpendicularly with the aforementioned straight line in the same image as described above, is drawn, and 20 or more fibers intersect with the straight line Y.

The widths of the fibers intersecting the straight line X and the straight line Y in the observation image meeting the above-described conditions are visually read. 3 or more sets of images of surface portions, which are at least not overlapped, are thus observed, and the widths of the fibers intersecting the straight line X and the straight line Y are read in the each image. At least 120 fiber widths (20 fibers x 2 x 3 = 120) are thus read. The average fiber width (which is simply referred to as a "fiber width" at times) of ultrafine cellulose fibers is an average value of the fiber widths thus read.

The fiber length of the ultrafine cellulose fibers is not particularly limited, and it is preferably 0.1 μm or more and 1000 μm or less, more preferably 0.1 μm or more and 800 μm or less, and particularly preferably 0.1 μm or more and 600 μm or less. By setting the fiber length within the above-described range, destruction of the crystalline region of the ultrafine cellulose fibers can be suppressed, and the slurry viscosity of the ultrafine cellulose fibers can also be set within an appropriate range. It is to be noted that the fiber length of the ultrafine cellulose fibers can be obtained by an image analysis using TEM, SEM or AFM.

The aspect ratio (fiber length/fiber width) of the cellulose fibers is not particularly limited, and for example, it is preferably 20 or more and 10000 or less, and more preferably 50 or more and 1000 or less. By setting the aspect ratio at the above-described lower limit or more, an ultrafine fiber-containing sheet is easily formed, or sufficient thickening properties are easily obtained upon production of a dispersed form in a solvent. By setting the aspect ratio at the above-described upper limit or less, when the cellulose fibers are treated, for example, as an aqueous dispersed solution, operations such as dilution are preferably easily handled.

The ultrafine cellulose fibers preferably have a type I crystal structure. In this regard, the fact that the ultrafine cellulose fibers have a type I crystal structure may be identified by a diffraction profile obtained from a wide angle X-ray diffraction photograph using CuKα (λ = 1.5418 Å) monochromatized with graphite. Specifically, it may be identified based on the fact that there are typical peaks at two positions near 2θ = 14° or more and 17° or less, and near 2θ = 22° or more and 23° or less.

The percentage of the type I crystal structure occupied in the ultrafine cellulose fibers is preferably 30% or more, more preferably 40% or more, and further preferably 50% or more. In this case, more excellent performance can be expected, in terms of heat resistance and the expression of low linear thermal expansion. The crystallinity can be obtained by measuring an X-ray diffraction profile and obtaining it according to a common method (Seagal et al., Textile Research Journal, Vol. 29, p. 786, 1959).

The ultrafine cellulose fibers preferably have phosphoric acid groups or substituents derived from the phosphoric acid groups. The phosphoric acid group is a divalent functional group corresponding to phosphoric acid from which a hydroxyl group is removed. Specifically, it is a group represented by $-PO_3H_2$. The substituents derived from the phosphoric acid groups include substituents, such as condensation-polymerized phosphoric acid groups, salts of phosphoric acid groups, and phosphoric acid ester groups, and they may be either ionic substituents or nonionic substituents.

In the present invention, the phosphoric acid group or the phosphoric acid group-derived substituent may be a substituent represented by the following formula (1):

[Formula 1]

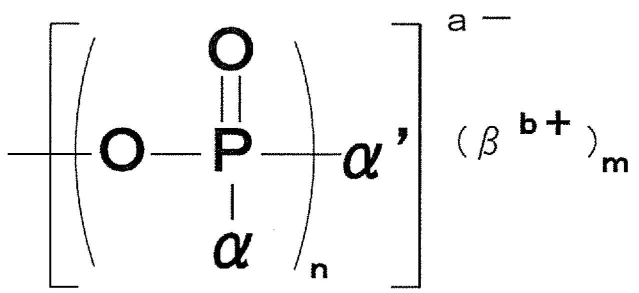

(1)

wherein a, b, m, and n each independently represent an integer (provided that a = b x m). In addition, α and α' each independently represent R or OR. R represents a hydrogen atom, a saturated straight chain hydrocarbon group, a

saturated branched chain hydrocarbon group, a saturated cyclic hydrocarbon group, an unsaturated straight chain hydrocarbon group, an unsaturated branched chain hydrocarbon group, an aromatic group, or a derivative thereof. β represents a mono- or more-valent cation consisting of an organic or inorganic matter.

< Introduction of phosphoric acid groups >

Introduction of phosphoric acid groups may be carried out by allowing at least one selected from a compound having phosphoric acid groups and salts thereof (hereinafter, referred to as a "phosphorylating reagent" or "Compound A") to react with the fiber raw material including cellulose. Such a phosphorylating reagent may be mixed into the fiber raw material in a dry or wet state, in the form of a powder or an aqueous solution. In another example, a powder or an aqueous solution of the phosphorylating reagent may be added into a slurry of the fiber raw material.

Introduction of phosphoric acid groups may be carried out by allowing at least one selected from a compound having phosphoric acid groups and salts thereof (a phosphorylating reagent or Compound A) to react with the fiber raw material including cellulose. It is to be noted that this reaction may be carried out in the presence of at least one selected from urea and derivatives thereof (hereinafter, referred to as "Compound B").

One example of the method of allowing Compound A to act on the fiber raw material in the presence of Compound B includes a method of mixing the fiber raw material in a dry or wet state with a powder or an aqueous solution of Compound A and Compound B. Another example thereof includes a method of adding a powder or an aqueous solution of Compound A and Compound B to a slurry of the fiber raw material. Among them, a method of adding an aqueous solution of Compound A and Compound B to the fiber raw material in a dry state, or a method of adding a powder or an aqueous solution of Compound A and Compound B to the fiber raw material in a wet state is preferable because of the high homogeneity of the reaction. Compound A and Compound B may be added at the same time or may be added separately. Alternatively, Compound A and Compound B to be subjected to the reaction may be first added as an aqueous solution, which may be then compressed to squeeze out redundant chemicals. The form of the fiber raw material is preferably a cotton-like or thin sheet form, but the form is not particularly limited thereto.

The Compound A used in the present embodiment is at least one selected from a compound having a phosphoric acid group or a salt thereof.

Examples of the compound having a phosphoric acid group include, but are not particularly limited to, phosphoric acid, lithium salts of phosphoric acid, sodium salts of phosphoric acid, potassium salts of phosphoric acid, and ammonium salts of phosphoric acid. Examples of the lithium salts of phosphoric acid include lithium dihydrogen phosphate, dilithium hydrogen phosphate, trilithium phosphate, lithium pyrophosphate, and lithium polyphosphate. Examples of the sodium salts of phosphoric acid include sodium dihydrogen phosphate, disodium hydrogen phosphate, trisodium phosphate, sodium pyrophosphate, and sodium polyphosphate. Examples of the potassium salts of phosphoric acid include potassium dihydrogen phosphate, dipotassium hydrogen phosphate, tripotassium phosphate, potassium pyrophosphate, and potassium polyphosphate. Examples of the ammonium salts of phosphoric acid include ammonium dihydrogen phosphate, diammonium hydrogen phosphate, triammonium phosphate, ammonium pyrophosphate, and ammonium polyphosphate.

Among them, from the viewpoints of high efficiency in introduction of the phosphoric acid group, an improving tendency of the defibration efficiency in a defibration step described below, low cost, and industrial applicability, phosphoric acid, sodium phosphate, potassium phosphate, and ammonium phosphate are preferable. Sodium dihydrogen phosphate, or disodium hydrogen phosphate is more preferable.

Further, since the uniformity of the reaction is improved and the efficiency in introduction of a phosphoric acid group is enhanced, the Compound A is preferably used as an aqueous solution. Although there is no particular restriction on the pH of an aqueous solution of the Compound A, the pH is preferably pH 7 or less because the efficiency in introduction of a phosphoric acid group is high, and more preferably pH 3 or more and pH 7 or less from the viewpoint of suppression of hydrolysis of a pulp fiber. The pH of an aqueous solution of the Compound A may be adjusted, for example, by using, among compounds having a phosphoric acid group, a combination of an acidic one and an alkaline one, and changing the amount ratio thereof. The pH of an aqueous solution of Compound A may also be adjusted by adding an inorganic alkali or an organic alkali to an acidic compound among compounds having a phosphoric acid group.

Although there is no particular restriction on the amount of the Compound A added to a fiber raw material, if the amount of the Compound A added is converted to a phosphorus atomic weight, the amount of phosphorus atoms added with respect to the fiber raw material (absolute dry mass) is preferably 0.5% by mass or more and 100% by mass or less, more preferably 1% by mass or more and 50% by mass or less, and most preferably 2% by mass or more and 30% by mass or less. When the amount of phosphorus atoms added to the fiber raw material is within the above-described range, the yield of ultrafine cellulose fibers can be further improved. On the other hand, by setting the amount of phosphorus atoms added to the fiber raw material at 100% by mass or less, the cost of the used Compound A can be suppressed, while enhancing phosphorylation efficiency.

Examples of the Compound B used in the present embodiment include urea, biuret, 1-phenyl urea, 1-benzyl

urea, 1-methyl urea, and 1-ethyl urea.

The Compound B is preferably used as an aqueous solution, as with the Compound A. Further, an aqueous solution in which both the Compound A and Compound B are dissolved is preferably used, because the uniformity of a reaction may be enhanced. The amount of the Compound B added to a fiber raw material (absolute dry mass) is preferably 1% by mass or more and 500% by mass or less, more preferably 10% by mass or more and 400% by mass or less, further preferably 100% by mass or more and 350% by mass or less, and particularly preferably 150% by mass or more and 300% by mass or less.

The reaction system may comprise an amide or an amine, in addition to the Compound A and the Compound B. Examples of the amide include formamide, dimethylformamide, acetamide, and dimethylacetamide. Examples of the amine include methylamine, ethylamine, trimethylamine, triethylamine, monoethanolamine, diethanolamine, triethanolamine, pyridine, ethylenediamine, and hexamethylenediamine. Among them, particularly, triethylamine is known to work as a favorable reaction catalyst.

In the introduction of phosphoric acid groups, it is preferable to perform a heat treatment. Regarding the temperature of such a heat treatment, it is preferable to select a temperature that allows an efficient introduction of phosphoric acid groups, while suppressing the thermal decomposition or hydrolysis reaction of fibers. Specifically, the temperature is preferably 50°C or higher and 300°C or lower, more preferably 100°C or higher and 250°C or lower, and further preferably 130°C or higher and 200°C or lower. In addition, a vacuum dryer, an infrared heating device, or a microwave heating device may be used for heating.

Upon the heat treatment, if the time for leaving the fiber raw material to stand still gets longer while the fiber raw material slurry to which the Compound A is added contains water, as drying advances, water molecules and the Compound A dissolved therein move to the surface of the fiber raw material. As such, there is a possibility of the occurrence of unevenness in the concentration of the Compound A in the fiber raw material, and the introduction of phosphoric acid groups to the fiber surface may not progress uniformly. In order to suppress the occurrence of unevenness in the concentration of the Compound A in the fiber raw material due to drying, the fiber raw material in the shape of a very thin sheet may be used, or a method of heat-drying or vacuum-drying the fiber raw material, while kneading or stirring with the Compound A using a kneader or the like, may be employed.

As a heating device used for heat treatment, a device capable of always discharging moisture retained by slurry or moisture generated by an addition reaction of phosphoric acid groups with hydroxy groups of the fiber to the outside of the device system is preferable, and for example, forced convection ovens or the like are preferable. By always discharging moisture in the device system, in addition to being able to suppress a hydrolysis reaction of phosphoric acid ester bonds, which is a reverse reaction of the phosphoric acid esterification, acid hydrolysis of sugar chains in the fiber may be suppressed as well, and ultrafine fibers with a high axial ratio can be obtained.

The time for heat treatment is, although affected by the heating temperature, preferably 1 second or more and 300 minutes or less, more preferably 1 second or more and 1000 seconds or less, and further preferably 10 seconds or more and 800 seconds or less, after moisture is substantially removed from the fiber raw material slurry. In the present invention, by setting the heating temperature and heating time within an appropriate range, the amount of phosphoric acid groups introduced can be set within a preferred range.

The amount of phosphoric acid groups introduced is, per 1 g (mass) of the ultrafine cellulose fibers, preferably 5.20 mmol/g or less, more preferably 0.1 mmol/g or more and 3.65 mmol/g or less, even more preferably 0.14 mmol/g or more and 3.5 mmol/g or less, further preferably 0.2 mmol/g or more and 3.2 mmol/g or less, particularly preferably 0.4 mmol/g or more and 3.0 mmol/g or less, and most preferably 0.6 mmol/g or more and 2.5 mmol/g or less. By setting the amount of phosphoric acid groups introduced within the above-described range, it may become easy to perform fibrillation on the fiber raw material, and the stability of the ultrafine cellulose fibers can be enhanced. In addition, by setting the amount of phosphoric acid groups introduced within the above-described range, it becomes possible to keep the hydrogen bond between ultrafine cellulose fibers, while facilitating fibrillation, and thus, when a sheet is formed with the ultrafine cellulose fibers, the sheet is anticipated to have favorable strength.

The amount of phosphoric acid groups introduced into a fiber raw material may be measured by a conductometric titration method. Specifically, the amount introduced may be measured by performing fibrillation on ultrafine fibers in a defibration treatment step, treating the resulting slurry comprising ultrafine cellulose fibers with an ion exchange resin, and then examining a change in the electrical conductivity while adding an aqueous sodium hydroxide solution.

The conductometric titration confers a curve shown in Figure 1 as an alkali is added. First, the electrical conductivity is rapidly reduced (hereinafter, this region is referred to as a "first region"). Then, the conductivity starts rising slightly (hereinafter, this region is referred to as a "second region"). Then, the increment of the conductivity is increased (hereinafter, this region is referred to as a "third region"). In short, three regions appear. The boundary point between the second region and the third region is defined as a point at which a change amount in the two differential values of conductivity, namely, an increase in the conductivity (inclination) becomes maximum. Among them, the amount of the alkali required for the first region among these regions is equal to the amount of a strongly acidic group in the slurry used in the titration, and the amount of the alkali required for the second region is equal to the amount of a weakly acidic

group in the slurry used in the titration. When condensation of a phosphoric acid group occurs, the weakly acidic group is apparently lost, so that the amount of the alkali required for the second region is decreased as compared with the amount of the alkali required for the first region. On the other hand, the amount of the strongly acidic group agrees with the amount of the phosphorus atom regardless of the presence or absence of condensation. Therefore, the simple term "the amount of the phosphoric acid group introduced (or the amount of the phosphoric acid group)" or "the amount of the substituent introduced (or the amount of the substituent)" refers to the amount of the strongly acidic group. That is to say, the amount (mmol) of the alkali required for the first region in the curve shown in Figure 1 is divided by the solid content (g) in the slurry as a titration target to obtain the amount (mmol/g) of the substituent introduced.

The phosphoric acid group introduction step may be performed at least once, but may be repeated multiple times as well. This case is preferable, since more phosphoric acid groups are introduced.

< Introduction of carboxyl groups >

In the present invention, when the ultrafine cellulose fibers have carboxyl groups, such carboxyl groups can be introduced into the ultrafine cellulose fibers, for example, by performing an oxidation treatment such as a TEMPO (2,2,6,6-tetramethylpiperidin-1-oxyl) oxidation treatment on the fiber raw material, or by treating the ultrafine cellulose fibers with a compound having groups derived from carboxylic acid, a derivative thereof, or an acid anhydride thereof or a derivative thereof.

Examples of the compound having a carboxyl group include, but are not particularly limited to, dicarboxylic acid compounds such as maleic acid, succinic acid, phthalic acid, fumaric acid, glutaric acid, adipic acid or itaconic acid, and tricarboxylic acid compounds such as citric acid or aconitic acid.

Examples of the acid anhydride of the compound having a carboxyl group include, but are not particularly limited to, acid anhydrides of dicarboxylic acid compounds, such as maleic anhydride, succinic anhydride, phthalic anhydride, glutaric anhydride, adipic anhydride, or itaconic anhydride.

Examples of the derivative of the compound having a carboxyl group include, but are not particularly limited to, an imidized product of the acid anhydride of the compound having a carboxyl group and a derivative of the acid anhydride of the compound having a carboxyl group. Examples of the imidized product of the acid anhydride of the compound having a carboxyl group include, but are not particularly limited to, imidized products of dicarboxylic acid compounds, such as maleimide, succinimide, or phthalimide.

The derivative of the acid anhydride of the compound having a carboxyl group is not particularly limited. Examples include acid anhydrides of the compounds having a carboxyl group, in which at least some hydrogen atoms are substituted with substituents (for example, an alkyl group, a phenyl group, etc.), such as dimethylmaleic anhydride, diethylmaleic anhydride, or diphenylmaleic anhydride.

The amount of carboxyl groups introduced is, per 1 g (mass) of the ultrafine cellulose fibers, preferably 0.1 mmol/g or more and 3.65 mmol/g or less, more preferably 0.14 mmol/g or more and 3.5 mmol/g or less, further preferably 0.2 mmol/g or more and 3.2 mmol/g or less, particularly preferably 0.4 mmol/g or more and 3.0 mmol/g or less, and most preferably 0.6 mmol/g or more and 2.5 mmol/g or less.

The amount of carboxyl groups introduced into a fiber raw material can be measured by a conductometric titration method. In conductometric titration, addition of alkali gives the curve shown in Figure 2. The amount of the alkali (mmol) required for the first region in the curve shown in Figure 2 is divided by the solid content (g) in the slurry to be titrated to determine the amount of the substituents introduced (mmol/g).

< Alkali treatment step >

When the ultrafine cellulose fibers are produced, an alkali treatment may be performed between a substituent introduction step and a defibration treatment step described below. The method of the alkali treatment is not particularly limited. For example, a method of immersing substituent-introduced fibers in an alkaline solution may be applied.

The alkali compound contained in the alkaline solution is not particularly limited, and it may be either an inorganic alkaline compound or an organic alkali compound. In the present embodiment, sodium hydroxide or potassium hydroxide is preferably used as an alkali compound, because of high versatility. In addition, the solvent contained in the alkaline solution may be either water or an organic solvent. The solvent contained in the alkaline solution is preferably water, or a polar solvent including a polar organic solvent exemplified by alcohol, and is more preferably an aqueous solvent containing, at least, water. The alkaline solution is preferably, for example, a sodium hydroxide aqueous solution or a potassium hydroxide aqueous solution, because of high versatility.

The temperature of the alkali solution in the alkali treatment step is not particularly limited, and for example, it is preferably 5°C or higher and 80°C or lower, and more preferably 10°C or higher and 60°C or lower. The immersion time required for immersing the substituent-introduced fibers in the alkali solution in the alkali treatment step is not particularly limited, and for example, it is preferably 5 minutes or more and 30 minutes or less, and more preferably 10

minutes or more and 20 minutes or less. The amount of the alkali solution used in the alkali treatment is not particularly limited, and for example, it is preferably 100% by mass or more and 100000% by mass or less, and more preferably 1000% by mass and 10000% by mass or less, with respect to the absolute dry mass of the substituent-introduced fibers.

In order to reduce the amount of the alkaline solution used in the alkali treatment step, the substituent-introduced fibers may be washed with water or an organic solvent after completion of the substituent introduction step and before the alkali treatment step. After completion of the alkali treatment step and before the defibration treatment step, the substituent-introduced fibers that have been treated with alkali are preferably washed with water or an organic solvent, from the viewpoint of the improvement of the handling property.

< Acid treatment step >

When the ultrafine cellulose fibers are produced, an acid treatment may be performed on the fiber raw material between a substituent introduction step and a defibration treatment step described below. An example of the present embodiment may be a case where a substituent introduction step, an acid treatment, an alkali treatment, and a defibration treatment are carried out in this order.

The temperature of the acid solution in the acid treatment step is not particularly limited, and for example, it is preferably 5°C or higher and 100°C or lower, and more preferably 20°C or higher and 90°C or lower. The immersion time required for immersing the substituent-introduced fibers in the acid solution in the acid treatment step is not particularly limited, and for example, it is preferably 5 minutes or more and 120 minutes or less, and more preferably 10 minutes or more and 60 minutes or less. The amount of the acid solution used in the acid treatment is not particularly limited, and for example, it is preferably 100% by mass or more and 100000% by mass or less, and more preferably 1000% by mass and 10000% by mass or less, with respect to the absolute dry mass of the fiber raw material.

The acid treatment method is not particularly limited, and it may be, for example, a method of immersing a fiber raw material in an acidic liquid containing acid. The concentration of the used acidic liquid is not particularly limited, and for example, it is preferably 10% by mass or less, and more preferably 5% by mass or less. The pH of the used acidic liquid is not particularly limited, and for example, it is pH 0 to 4, and more preferably pH 1 to 3. As acid contained in the acidic liquid, inorganic acid, sulfonic acid, carboxylic acid and the like can be used, for example. Examples of the inorganic acid may include sulfuric acid, nitric acid, hydrochloric acid, hydrobromic acid, hydroiodic acid, hypochlorous acid, chlorous acid, chloric acid, perchloric acid, phosphoric acid, and boric acid. Examples of the sulfonic acid may include methanesulfonic acid, ethanesulfonic acid, benzenesulfonic acid, p-toluenesulfonic acid, and trifluoromethanesulfonic acid. Examples of the carboxylic acid may include formic acid, acetic acid, citric acid, gluconic acid, lactic acid, oxalic acid, and tartaric acid. Among these acids, hydrochloric acid or sulfuric acid is particularly preferably used.

< Defibration treatment (fibrillation) >

The substituent-introduced fibers are subjected to a defibration treatment in a defibration treatment step, so as to obtain ultrafine cellulose fibers. In the defibration treatment step, for example, a defibration treatment apparatus can be used. Examples of the defibration treatment apparatus that can be used herein may include, but are not particularly limited to, a wet atomization apparatus, a high-speed defibrator, a grinder (stone mill-type crusher), a high-pressure homogenizer, an ultrahigh-pressure homogenizer, a high-pressure collision-type crusher, a ball mill, a bead mill, a disc-type refiner, a conical refiner, a twin-screw kneader, an oscillation mill, a homomixer under high-speed rotation, an ultrasonic disperser, and a beater. The solid concentration of the ultrafine cellulose fibers upon the defibration treatment can be determined, as appropriate. Among the above-described defibration treatment apparatuses, a wet atomization apparatus, a high-speed defibrator, a high-pressure homogenizer, and an ultrahigh-pressure homogenizer, which are less affected by milling media and are less likely to be contaminated, are more preferably used. The number of defibration treatments (fibrillation) is not particularly limited, and in order to promote sufficient fibrillation, the defibration treatments (fibrillation) are preferably carried out multiple times. The upper limit of the number of defibration treatments (fibrillation) is not particularly limited, and it is practically 10 times or less.

In the defibration treatment step, for example, the substituent-introduced fibers are preferably diluted with a dispersion medium, so that the fibers are formed into a slurry. As such a dispersion medium, one or two or more selected from water and organic solvents such as polar organic solvents can be used. The polar organic solvent is not particularly limited, and preferred examples of the polar organic solvent may include alcohols, polyhydric alcohols, ketones, ethers, esters, and aprotic polar solvents. Examples of the alcohols may include methanol, ethanol, isopropanol, n-butanol, and isobutyl alcohol. Examples of the polyhydric alcohols may include ethylene glycol, propylene glycol, and glycerin. Examples of the ketones may include acetone and methyl ethyl ketone (MEK). Examples of the ethers may include diethyl ether, tetrahydrofuran, ethylene glycol monomethyl ether, ethylene glycol monoethyl ether, ethylene glycol mono-n-butyl ether, and propylene glycol monomethyl ether. Examples of the esters may include ethyl acetate and butyl acetate. Examples of the aprotic polar solvents may include dimethyl sulfoxide (DMSO), dimethylformamide (DMF), dimethylacetamide (DMAc), and N-metyl-2-pyrrolidinone (NMP).

< Enzyme treatment >

In the present invention, an enzyme treatment may be performed. That is to say, the cellulose-containing composition of the present invention may comprise an enzyme. In addition, the cellulose-containing composition of the present invention may comprise a protein formed by inactivation of an enzyme.

The enzyme that can be used in the present invention is a cellulase enzyme, which is classified into a glycoside hydrolase family that is based on a higher-order structure of a catalytic domain having cellulose hydrolysis reaction function. The cellulase enzyme is classified into endo-glucanase and cellobiohydrolase, depending on cellulose-decomposing properties. Endo-glucanase has high hydrolyzability to amorphous portions of cellulose, soluble cellooligosaccharides, or cellulose derivatives such as carboxymethyl cellulose, and randomly cleaves their molecular chains from the inside, so as to reduce the polymerization degree. On the other hand, endo-glucanase has low hydrolytic reactivity to cellulose microfibrils having crystallinity. In contrast, cellobiohydrolase decomposes crystalline portions of cellulose and gives cellobiose. In addition, cellobiohydrolase hydrolyzes cellulose from the termini of cellulose molecules, and is also referred to as "exo-type enzyme" or "processive enzyme." In the present invention, endo-glucanase is preferably used.

The enzyme used in the present invention may also include hemicellulase enzymes, as well as endo-glucanase and cellobiohydrolase. Examples of such hemicellulase enzyme may include xylanase that is an enzyme decomposing xylan, mannase that is an enzyme decomposing mannan, and arabanase that is an enzyme decomposing araban. Moreover, pectinase that is an enzyme decomposing pectin can also be used as a hemicellulase enzyme. Microorganisms generating hemicellulase enzymes also generate cellulase enzymes in many cases.

Hemicelluloses are polysaccharides excluding pectins, which are present among cellulose microfibrils in plant cell walls. There are a wide variety of hemicelluloses, and they are different, even depending on the types of plants or among the wall layers of cell walls. Regarding woods, glucomannan is a main ingredient of the secondary wall of a needle leaf tree, whereas 4-O-methylglucuronoxylan is a main ingredient of the secondary wall of a broad leaf tree. Hence, in order to obtain ultrafine fibers from needle leaf trees, mannase is preferably used. In the case of broad leaf trees, xylanase is preferably used.

According to the present invention, a method for producing a cellulose-containing composition is provided, comprising a step of adding an enzyme. By adding an enzyme to ultrafine cellulose fibers, the ultrafine cellulose fibers can be reacted with the enzyme. In the present invention, an embodiment, in which a step of washing the ultrafine cellulose fibers is not carried out after completion of the enzyme treatment, can be adopted.

In the present invention, the enzyme may be inactivated after completion of the enzyme treatment. Examples of the method of inactivating the enzyme may include, but are not limited to: a method comprising heating a mixture of ultrafine cellulose fibers and an enzyme to 100°C, and then, while keeping the temperature at 100°C, leaving the mixture at rest for 30 minutes to 1 hour; and a method comprising adding a strong base to a mixture of ultrafine cellulose fibers and an enzyme to adjust a pH value to pH 10 or more.

According to the above-described method for producing a cellulose-containing composition, the cellulose-containing composition of the present invention can be produced.

The amount of an enzyme added with respect to 1 part by mass of cellulose fibers having a fiber width of 1000 nm or less is not particularly limited, and it is preferably 1 x $10^{-3}$ parts by mass or less, more preferably 1 x $10^{-4}$ parts by mass or less, further preferably 1 x $10^{-5}$ parts by mass or less, and particularly preferably 5.0 x $10^{-6}$ parts by mass or less. On the other hand, the amount of an enzyme added is preferably 1 x $10^{-7}$ parts by mass or more, more preferably 3 x $10^{-7}$ parts by mass or more, and further preferably 1 x $10^{-6}$ parts by mass or more, with respect to 1 part by mass of the cellulose fibers.

By setting the amount of the enzyme added within the above-described range, particles (aggregates) can be suppressed in coated products.

The reaction time for the reaction of the ultrafine cellulose fibers with the enzyme is not particularly limited. In general, the reaction time is preferably 1 minute to 24 hours, and more preferably 1 minute to 1 hour.

The reaction temperature and the reaction pH applied to the reaction of the ultrafine cellulose fibers with the enzyme are preferably kept to the temperature and pH optimal to the used enzyme. In general, the reaction temperature and the reaction pH are preferably kept at 20°C to 80°C, and at pH 4.5 to 9.5.

By setting the reaction conditions within the above-described range, particles (aggregates) can be suppressed in coated products.

< Coarse cellulose fibers >

As described above, the step of obtaining ultrafine cellulose fibers preferably comprises a step of fibrillating a

fiber raw material (coarse cellulose fibers). In this step, a majority of the coarse cellulose fibers is fibrillated, but there is a case where a part thereof remains without being fibrillated. In such a case, the cellulose fiber-containing composition of the present invention comprises coarse cellulose fibers.

The coarse cellulose fibers comprised in the cellulose fiber-containing composition of the present invention indicate cellulose fibers, which are precipitated, after a cellulose-dispersed solution has been adjusted to a solid concentration of 0.2% by mass, and has been then centrifuged using a high speed refrigerated centrifuge (manufactured by KOKUSAN Co. Ltd., H-2000B) under conditions of 12000 G for 10 minutes.

A small amount of precipitated components means that the yield of a supernatant after completion of the centrifugation is high. This supernatant yield after completion of the centrifugation is preferably 80% by mass or more, with respect to the total mass of cellulose fibers. The supernatant yield after completion of the centrifugation is more preferably 90% by mass or more, further preferably 95% by mass or more, and particularly preferably 99% by mass or more.

It is to be noted that the above-described supernatant yield after completion of the centrifugation of the ultrafine cellulose fiber-dispersed solution can be measured by the following method in the present description.

The yield of a supernatant obtained after completion of the centrifugation of the ultrafine cellulose fiber-dispersed solution was measured according to the following method. The supernatant yield obtained after completion of the centrifugation serves as an indicator of the yield of ultrafine cellulose fibers. The higher the supernatant yield, the higher the yield of ultrafine cellulose fibers that can be obtained.

The ultrafine cellulose fiber-dispersed solution was adjusted to a solid concentration of 0.2% by mass, and was then centrifuged using a high speed refrigerated centrifuge (manufactured by KOKUSAN Co. Ltd., H-2000B) under conditions of 12000 G for 10 minutes. The obtained supernatant was recovered, and the solid concentration in the supernatant was then measured. After that, the yield of the ultrafine cellulose fibers was obtained according to the following equation:

$$\text{Yield (\%) of ultrafine cellulose fibers} = \text{solid concentration (\%) in supernatant} / 0.2 \times 100$$

In the present embodiment, the cellulose fiber-containing composition is characterized in that the supernatant yield in the ultrafine cellulose fiber-dispersed solution after completion of the centrifugation is high, namely, the content of coarse fibers in the cellulose fiber-containing composition is low. By setting the supernatant yield in the ultrafine cellulose fiber-dispersed solution after completion of the centrifugation within the above-described range, when the cellulose fiber-containing composition is mixed into a patient, particles (aggregates) can be suppressed in coated products.

(Specific component(s))

The cellulose fiber-containing composition of the present invention may comprise the following specific component(s), in order to regulate the image clarity of a coating film.

< Sugars >

Examples of the specific component may include monosaccharides, polysaccharides, and the sugar alcohols thereof. Among sugars (excluding sugar alcohols), monosaccharides or polysaccharides are preferable, those having a glucose unit or a fructose unit are preferable, and those having a glucose unit are more preferable. Among the sugar alcohols, hexitol is preferable. Examples of preferred sugars may include trehalose, maltose, sucrose, lactulose, lactose, cellobiose, glucose, fructose, mannose, galactose, anabinose, xylose, erythritol, glycerin, isomalt, lactitol, maltitol, mannitol, sorbitol, xylitol, and the derivatives thereof. Among these, trehalose derivatives are preferable. It is to be noted that the term "derivative" is used in the present description to include not only the present compound itself, but also the present compound into which any given substituent is introduced, a compound obtained by dissociating or cyclizing a portion of the present compound, the present compound into which an acidic group or a basic group is introduced, and the salt thereof. An example of any given substituent may be the after-mentioned substituent Z. Examples of a derivative formed by introducing a substituent into trehalose may include esters (acylated products), sulfuric esters or salts thereof, and quaternary cationized products or salts thereof. When the acyl group of an acylated product is represented by $R^YCO$-, examples of $R^Y$ may include an alkyl group, a hydroxyalkyl group, an aryl group, and an aralkyl group, which are exemplified in the after-mentioned substituent Z.

< Water-soluble compound >

A water-soluble compound can be used as a specific component, and this water-soluble compound is preferably a compound with a molecular weight of 200 or less, having a functional group capable of forming a hydrogen bond. The above-described functional group is preferably a carbonyl group or an amino group. The above-described water-soluble compound is preferably a urea derivative. The urea derivative is specifically a compound represented by the following formula (2) or a salt thereof:

[Formula 2]

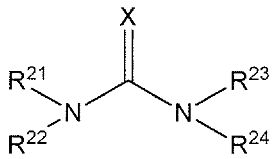

(2)

wherein $R^{21}$ to $R^{24}$ each independently represent a hydrogen atom or a monovalent organic group. Examples of the monovalent organic group may include an alkyl group (wherein the number of carbon atoms contained is preferably 1 to 12, more preferably 1 to 6, and further preferably 1 to 3 carbon atoms, and the alkyl group may be either chain or cyclic, or may be straight-chain or branched-chain), an alkenyl group (wherein the number of carbon atoms contained is preferably 2 to 12, more preferably 2 to 6, and further preferably 2 or 3 carbon atoms, and the alkenyl group may be either chain or cyclic, or may be straight-chain or branched-chain), an aryl group (wherein the number of carbon atoms contained is preferably 6 to 22, more preferably 6 to 18, and further preferably 6 to 10), an aralkyl group (wherein the number of carbon atoms contained is preferably 7 to 23, more preferably 7 to 19, and further preferably 7 to 11, and the alkylene portion may be chain or cyclic, or may be straight-chain or branched-chain), a carbamoyl group (wherein the number of carbon atoms contained is preferably 1 to 12, more preferably 1 to 6, and further preferably 1 to 3), an acyl group (wherein the number of carbon atoms contained is preferably 2 to 12, more preferably 2 to 6, and further preferably 2 or 3, and the alkyl portion may be chain or cyclic, or may be straight-chain or branched-chain), and an aryloyl group (wherein the number of carbon atoms contained is preferably 7 to 23, more preferably 7 to 19, and further preferably 7 to 11). Among others, $R^{21}$ to $R^{24}$ are each preferably a hydrogen atom, a methyl group, an ethyl group, a phenyl group, a benzyl group, a hydroxymethyl group, a hydroxyethyl group, or a carbamoyl group, and more preferably a hydrogen atom. Preferably, two or more of $R^{21}$ to $R^{24}$ are hydrogen atoms, and more preferably, three or more of $R^{21}$ to $R^{24}$ are hydrogen atoms, and particularly preferably, all of $R^{21}$ to $R^{24}$ are hydrogen atoms.

The above-described monovalent organic group may have the following substituent Z. For example, the above-described alkyl group may bind to a hydroxyl group to form a hydroxyalkyl group.

$R^{21}$ to $R^{24}$ may bind to one another to form a ring. When $R^{21}$ to $R^{24}$ form a ring, they may be mediated by the following linking group Y.

X represents an oxygen atom or a sulfur atom, and is preferably an oxygen atom. However, such an oxygen atom or a sulfur atom may be substituted with a hydrogen atom or an alkyl group (wherein the number of carbon atoms contained is preferably 1 to 12, more preferably 1 to 6, and further preferably 1 to 3), so that the compound represented by the formula (2) may have an isourea structure.

When the compound represented by the formula (2) forms a salt, the salt is not particularly limited, and examples of the salt may include hydrochloride, sulfate, phosphate, and nitrate.

The water-soluble compound has a molecular weight of 200 or less. The molecular weight of the water-soluble compound is preferably 150 or less, more preferably 100 or less, and particularly preferably 80 or less. The lower limit is practically 40 or more. The molecular weight of the water-soluble compound can be confirmed by mass spectrometry.

Specific examples of the water-soluble compound may include urea, thiourea, biuret, phenyl urea, benzyl urea, dimethyl urea, diethyl urea, tetramethyl urea, benzoraine urea, hydantoin, and a salt thereof. Among others, urea or a salt thereof is preferable.

The water-soluble compound is not particularly limited, as long as it is a compound having solubility in water. For example, the water-soluble compound can be defined to be a compound that is dissolved in an amount of 0.5% by mass or more in ion exchange water at 25°C. The water-soluble compound is dissolved in such ion exchange water in an amount of preferably 1 % by mass or more, and more preferably 10% by mass or more.

< Guanidine derivative >

A compound represented by the following formula (3) or a salt thereof (which may also be referred to as a guanidine derivative in the present description) can be used as a specific component:

[Formula 3]

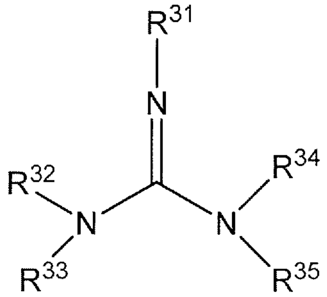

(3)

wherein $R^{31}$ to $R^{35}$ each independently represent a hydrogen atom or a monovalent substituent, and preferably, three or more of $R^{31}$ to $R^{35}$ are hydrogen atoms, more preferably, four or more of $R^{31}$ to $R^{35}$ are hydrogen atoms, and particularly preferably, all of $R^{31}$ to $R^{35}$ are hydrogen atoms. The compound represented by the formula (3) more preferably forms a salt. In the present invention, the compound represented by the formula (3) may be confirmed to be present in the form of ions (cations) in a solution, and this aspect is also included in the preferred scope of the present invention.

Examples of the monovalent substituent may include an alkyl group (wherein the number of carbon atoms contained is preferably 1 to 12, more preferably 1 to 6, and further preferably 1 to 3), an aryl group (wherein the number of carbon atoms contained is preferably 6 to 22, more preferably 6 to 18, and further preferably 6 to 10), an aralkyl group (wherein the number of carbon atoms contained is preferably 7 to 23, more preferably 7 to 19, and further preferably 7 to 11), an acyl group (wherein the number of carbon atoms contained is preferably 2 to 12, more preferably 2 to 6, and further preferably 2 or 3), an aryloyl group (wherein the number of carbon atoms contained is preferably 7 to 23, more preferably 7 to 19, and further preferably 7 to 11), an amino group (wherein the number of carbon atoms contained is preferably 0 to 12, more preferably 0 to 6, and further preferably 0 to 3), a carbamoyl group (wherein the number of carbon atoms contained is preferably 1 to 12, more preferably 1 to 6, and further preferably 1 to 3), an alkylsulfonyl group (wherein the number of carbon atoms contained is preferably 1 to 12, more preferably 1 to 6, and further preferably 1 to 3), an arylsulfonyl group (wherein the number of carbon atoms contained is preferably 6 to 22, more preferably 6 to 18, and further preferably 6 to 10), and a phosphoryl group (wherein the number of carbon atoms contained is preferably 0 to 12, more preferably 0 to 6, and further preferably 0 to 3). The monovalent substituent may further have any given substituent Z as described below, as long as such substituent Z does not impair the effects of the present invention. Besides, in the definitions of the above-described substituent, the alkyl portion or the alkylene portion may be cyclic or chain, or may be branched-chain or straight-chain.

Examples of the formed salt may include hydrochloride, sulfate, phosphate, nitrate, sulfamate, carbonate, isothiocyanate, and acetate. Among these salts, hydrochloride, phosphate and sulfamate are preferable, and sulfamate is particularly preferable.

$R^{31}$ to $R^{35}$ may bind to each other to form a ring. Upon formation of the ring, $R^{31}$ to $R^{35}$ may be mediated by the following linking group Y. The formed ring may be annelated to form a heterocyclic aromatic ring containing a nitrogen atom as shown in the above formula.

< Pigment dispersing agent >

As a specific component, a pigment dispersing agent having an ionic group (which is simply referred to as a "pigment dispersing agent" at times) is used. The pigment dispersing agent is a component used to uniformly disperse a pigment (a fine solid) in a dispersion medium to prepare a stable dispersed form.

The pigment dispersing agent is, for example, one type of surfactant, in terms of structure. In particular, a pigment dispersing agent having the function of adsorbing on the surface of a solid such as a pigment, as well as affinity to a dispersion medium, is preferable. In addition to such a pigment adsorbing action and affinity to a dispersion medium, some pigment dispersing agents further have electrostatic repulsion or steric repulsion (imparting of repulsive force upon dispersion) in order to prevent re-aggregation of the pigment or to suppress generation of precipitates. In the present invention, a pigment dispersing agent having a pigment adsorbing action, a dispersion medium affinity action, and an action to impart repulsive force upon dispersion is preferable.

The pigment dispersing agent having these three functions may be, for example, a resin-type pigment dispersing agent.

The resin-type pigment dispersing agent may be, for example, a polymer constituted with a polyester resin, a polyolefin resin, a polyurethane resin, or a (meth)acrylic acid resin. The polymer having a functional group such as an amino group, a hydroxyl group, a carboxyl group, a carboxylic ester group, an amide group, an ammonium group, a

sulfo group, a sulfate group, a phosphoryl group, a phosphoric acid group, a carbamoyl group or a sulfamoyl group, on the side chain thereof, is preferable.

The molecular weight of the pigment dispersing agent having an ionic group is not particularly limited, and the pigment dispersing agent is preferably a high molecular weight compound. A high molecular weight compound having a weight average molecular weight of 1,000 or more is preferable, and a high molecular weight compound having a weight average molecular weight of 5,000 or more is more preferable. The upper limit is preferably 100,000 or less, and more preferably 60,000 or less. It is to be noted that the weight average molecular weight (Mw) of the pigment dispersing agent is a value measured by gel permeation chromatography (GPC) under the following conditions, unless otherwise specified.

Solvent: Tetrahydrofuran (THF)
Column: Shodex K806, K805, and K803G
(wherein the three columns manufactured by Showa Denko K.K. were used in connection with one another)
Column temperature: 40°C
Sample concentration: 0.1% by mass
Detector: RI Model 504 (manufactured by GL Sciences, Inc.)
Pump: L6000 (manufactured by Hitachi Corporation)
Flow amount (flow rate): 1.0 ml/min
Injected amount: 10 μL
Calibration curve: There was used a calibration curve with 13 samples that were standard polystyrene, STK Standard Polystyrene (manufactured by Tosoh Corporation) with a molecular weight of 500 or more and 2,800,000 or less. The 13 samples were used with almost equal intervals.

The acid value of the pigment dispersing agent having an ionic group is not particularly limited, and it is preferably 5 mgKOH/g or more, more preferably 10 mgKOH/g or more, even more preferably 15 mgKOH/g or more, further preferably 20 mgKOH/g or more, still further preferably 25 mgKOH/g or more, and particularly preferably 30 mgKOH/g or more. The upper limit of the acid value is preferably 200 mgKOH/g or less, more preferably 180 mgKOH/g or less, even more preferably 150 mgKOH/g or less, further preferably 120 mgKOH/g or less, and particularly preferably 100 mgKOH/g or less.

The amine value of the pigment dispersing agent having an ionic group is not particularly limited, and it is preferably 5 mgKOH/g or more, more preferably 10 mgKOH/g or more, even more preferably 15 mgKOH/g or more, further preferably 20 mgKOH/g or more, still further preferably 25 mgKOH/g or more, and particularly preferably 30 mgKOH/g or more. The upper limit of the amine value is preferably 200 mgKOH/g or less, more preferably 180 mgKOH/g or less, even more preferably 150 mgKOH/g or less, still further preferably 120 mgKOH/g or less, and particularly preferably 100 mgKOH/g or less.

The ionic group of the pigment dispersing agent having an ionic group is not particularly limited, and it may be a cationic group, an anionic group, or a dissociable group dissociated by an acid or a base. Examples of the cationic group may include an amino group and a quaternary ammonium group. Examples of the anionic group may include a sulfo group, a carboxyl group, a sulfate group, and a phosphoric acid group. The dissociable group may be, for example, an amide group. The ionic group may form a salt having a counterion. The pigment dispersing agent having an ionic group may simultaneously have the above-described cationic group, anionic group and dissociable group in the molecule thereof.

There are various types of pigment dispersing agents having an ionic group. Examples of a polymer dispersing agent may include: anionic polymer dispersing agents, such as a styrene-maleic anhydride copolymer, a formalin condensate of naphthalenesulfonate, poly(meth)acrylate, carboxymethyl cellulose, an olefin-maleic anhydride copolymer, polystyrenesulfonate, an acrylamide-acrylic acid copolymer, and sodium alginate; and polymer dispersing agents, such as polyethyleneimine, an aminoalkyl (meth)acrylate copolymer, polyvinyl imidazoline, satokinsan, a resin (polymer) having a (meth)acrylate alkaline metal salt portion, a resin having a (meth)acrylic acid portion, and a resin having an alkylol ammonium salt portion. Regarding these polymer dispersing agents, KUSHI Yoshinori, "Bunsan-Zai (Dispersing Agents)" J. Jpn. Soc. Colour Mater., 78 [3] (2005) pp. 41-48, can be referred to, for example.

Among others, in the present invention, the pigment dispersing agent having an ionic group is preferably a resin having an alkylol ammonium salt portion, a resin having a (meth)acrylic acid portion, or a resin having a (meth)acrylate alkaline metal salt portion; and is particularly preferably alkylol ammonium salts, such as a polycarboxylic acid alkylol ammonium salt, an alkylol ammonium salt of a copolymer containing an acidic group or an alkylol ammonium salt of a polyfunctional polymer, (meth)acrylate resin potassium salts, and the like. It is to be noted that, in the present description, the term "(meth)acrylate" is used as a generic name for acrylate and methacrylate.

The alkylol ammonium salt portion is preferably a reaction site, in which an acidic group (e.g., a sulfo group, a carboxyl group, a sulfate group, a phosphoryl group, phosphoric acid, etc.) reacts with alkylol ammonium. The alkylol ammonium salt portion preferably has the following partial structure:

-C(=O)-N(-$R^{41}$)(-$R^{42}$-OH) Formula (41)

In the above formula, $R^{41}$ represents a hydrogen atom or an alkyl group (wherein the number of carbon atoms contained is preferably 1 to 12, more preferably 1 to 6, and further preferably 1 to 3), and $R^{42}$ represents an alkylene group (wherein the number of carbon atoms contained is preferably 1 to 12, more preferably 1 to 6, and further preferably 1 to 3). $R^{41}$ and $R^{42}$ may further have the substituent Z within a range in which the effects of the present invention can be obtained.

The pigment dispersing agent having an anionic group is preferably a polymer having a partial structure represented by the following formula (42):

-C(=O)-O-M Formula (42)

In the above formula, M represents a hydrogen atom or an alkali metal. The alkali metal is preferably sodium or potassium. Besides, O in the above formula may become an anion and M may become a cation, so that they may form a salt.

As a pigment dispersing agent having an anionic group, a polymer having a partial structure represented by the following formula (43) is also preferable:

-C(=O)-O-$L^1$-A Formula (43)

In the above formula, A is an acidic group, and is preferably a sulfo group, a carboxyl group, a sulfate group, a phosphoryl group, or a phosphoric acid group. This acidic group may form a salt. Examples of a preferred salt may include alkali metal salts such as a sodium salt or a potassium salt. $L^1$ is the after-mentioned linking group Y, and among others, $L^1$ is preferably an alkylene group (wherein the number of carbon atoms contained is preferably 1 to 12, more preferably 1 to 6, and further preferably 2 or 3).

Examples of the pigment dispersing agent having an alkylol ammonium salt portion that can be used herein may include DISPERBYK, DISPERBYK-180, DISPERBYK-181, DISPERBYK-187, DISPERBYK-140, BYK-151, BYK-9076, BYK-W968, and BYK-W969 (all of which are product names, manufactured by BYK).

As a pigment dispersing agent having a (meth)acrylate potassium salt portion, a polymer (including a copolymer) synthesized using sulfopropyl(meth)acrylate potassium as a monomer can be used.

As a (meth)acrylate resin potassium salt, for example, DISPER-AW300P (manufactured by Otsuka Chemical Co., Ltd.) or the like can be used.

Examples of the substituent Z may include an alkyl group (wherein the number of carbon atoms contained is preferably 1 to 24, more preferably 1 to 12, and further preferably 1 to 6); an aralkyl group (wherein the number of carbon atoms contained is preferably 7 to 21, more preferably 7 to 15, and further preferably 7 to 11); a hydroxyl group, an amino group, or a salt thereof (wherein the number of carbon atoms contained is preferably 0 to 24, more preferably 0 to 12, and further preferably 0 to 6); a thiol group, a carboxyl group, or a salt thereof; a carbamoyl group or a salt thereof (wherein the number of carbon atoms contained is preferably 1 to 24, more preferably 1 to 12, and further preferably 1 to 6); a sulfamoyl group or a salt thereof (wherein the number of carbon atoms contained is preferably 0 to 24, more preferably 0 to 12, and further preferably 0 to 6); an aryl group (wherein the number of carbon atoms contained is preferably 6 to 22, more preferably 6 to 18, and further preferably 6 to 10); an acyl group (wherein the number of carbon atoms contained is preferably 2 to 12, more preferably 2 to 6, and further preferably 2 or 3); an acyloxy group (wherein the number of carbon atoms contained is preferably 2 to 12, more preferably 2 to 6, and further preferably 2 or 3); a heterocyclic group (wherein the number of carbon atoms contained is preferably 2 to 8, and more preferably 2 to 5); and a halogen atom, a quaternary ammonium group, or a salt thereof (wherein the number of carbon atoms contained is preferably 3 to 23, more preferably 3 to 19, and further preferably 3 to 11).

Examples of the linking group Y may include an alkylene group (a methylene group, an ethylene group, a propylene group, etc.), an oxygen atom, a sulfur atom, a carbonyl group, a sulfonyl group, a sulfinyl group, an imino group ($NR^L$), and a combination thereof. $R^L$ represents a hydrogen atom, a methyl group, an ethyl group, or a propyl group. The number of carbon atoms contained in the linking group Y is preferably 1 or more and 12 or less, and more preferably 1 or more and 6 or less.

The content of a specific component is preferably 600 parts by mass or less, more preferably 400 parts by mass or less, further preferably 300 parts by mass or less, and particularly preferably 200 parts by mass or less, with respect to 100 parts by mass of the cellulose fibers. On the other hand, the content of a specific component is preferably 1 part by mass or more, more preferably 5 parts by mass or more, further preferably 10 parts by mass or more, and particularly preferably 15 parts by mass or more, with respect to 100 parts by mass of the cellulose fibers. From the viewpoint of suppression of the number of particles, the content of the specific component has a more preferred range, depending on the type of the specific component. For example, in the case of the aforementioned sugars, water-soluble

compounds, guanidine derivatives, hydrophilic polymers, pigment dispersing agents and the like, the content is more preferably 5 parts by mass or more and 300 parts by mass or less, even more preferably 10 parts by mass or more and 250 parts by mass or less, further preferably 15 parts by mass or more and 200 parts by mass or less, and particularly preferably 20 parts by mass or more and 170 parts by mass or less.

Only one type of specific component may be used, or two or more types of specific components may also be used in combination. When two or more types of specific components are used, the total amount thereof is preferably set within the above-described range.

(Resin)

When the cellulose fiber-containing composition of the present invention is processed into, for example, a paint, it may further comprise a thermoplastic resin, a thermosetting resin or a photocurable resin. Examples of such a resin may include a styrene resin, an acrylic resin, an aromatic polycarbonate resin, an aliphatic polycarbonate resin, an aromatic polyester resin, an aliphatic polyester resin, an aliphatic polyolefin resin, a cyclic olefin resin, a polyamide resin, a polyphenylene ether resin, a thermoplastic polyimide resin, a polyacetal resin, a polysulfone resin, an amorphous fluorine resin, a rosin resin, nitrocellulose, a vinyl chloride resin, a chlorinated rubber resin, a vinyl acetate resin, a phenolic resin, and an epoxy resin, but are not limited thereto.

In the case of producing a paint, the content of the resin is preferably 30 parts by mass or more, more preferably 70 parts by mass or more, and particularly preferably 100 parts by mass or more, with respect to 1 part by mass of the cellulose fibers. On the other hand, the content of the resin is preferably 500 parts by mass or less, more preferably 300 parts by mass or less, and particularly preferably 200 parts by mass or less, with respect to 1 part by mass of the cellulose fibers. By allowing the cellulose fiber-containing composition of the present invention to comprise the resin to result in the above-described content, the effects of the above-described specific component can be favorably exhibited, and suppression of particles (aggregates) in coated products, optimization of the elastic modulus or strength of a coating film, etc. can be realized.

(Hardening agent)

When the cellulose fiber-containing composition of the present invention is processed into a paint, the present cellulose fiber-containing composition preferably comprises a hardening agent. As such a hardening agent, a known hardening agent can be used, as appropriate. Examples of the hardening agent may include isocyanate-based hardening agents (polyisocyanate, etc.), epoxy(oxysilane)-based hardening agents, and oxetane-based hardening agents. In the present invention, isocyanate-based hardening agents are particularly preferable.

In the case of producing a paint, the content of the hardening agent is preferably 10 parts by mass or more, more preferably 20 parts by mass or more, and particularly preferably 30 parts by mass or more, with respect to 1 part by mass of the cellulose fibers. On the other hand, the content of the hardening agent is preferably 100 parts by mass or less, more preferably 80 parts by mass or less, and particularly preferably 60 parts by mass or less, with respect to 1 part by mass of the cellulose fibers. By allowing the cellulose fiber-containing composition of the present invention to comprise the hardening agent to result in the above-described content, the effects of the above-described specific component can be preferably exhibited, and suppression of particles (aggregates) in coated products, optimization of the elastic modulus of a coating film, etc. can be realized.

(Optional component)

The cellulose fiber-containing composition of the present invention may comprise optional components other than the aforementioned components. Examples of such optional components may include antifoaming agents, lubricants, ultraviolet absorbing agents, dyes, pigments, stabilizers, surfactants, coupling agents, inorganic layered compounds, inorganic compounds, leveling agents, organic particles, antistatic agents, magnetic powders, orientation promoters, plasticizers, antiseptics, and crosslinkers. Moreover, as such optional components, organic ions may also be added to the cellulose fiber-containing composition.

(Cellulose fiber-containing composition)

When the cellulose fiber-containing composition is a paint, the content of the cellulose fibers is preferably 0.05% by mass or more, more preferably 0.1% by mass or more, and further preferably 0.3% by mass or more, with respect to the solid content in the cellulose fiber-containing composition. On the other hand, the content of the cellulose fibers is preferably 10% by mass or less, more preferably 5% by mass or less, and further preferably 2% by mass or less.

When the cellulose fiber-containing composition is a thickener, the content of the cellulose fibers is preferably

0.1% by mass or more, and may also be 0.4% by mass or more, 1% by mass or more, 5% by mass or more, 10% by mass or more, 20% by mass or more, 30% by mass or more, 40% by mass or more, 50% by mass or more, or 55% by mass or more, with respect to the total amount of the cellulose fiber-containing composition. On the other hand, the content of the cellulose fibers is preferably 95% by mass or less, and more preferably 90% by mass or less.

When the cellulose fiber-containing composition is used as a thickener, the total amount of the above-described cellulose fibers, the above-described specific component, and water is preferably 80% by mass or more, more preferably 90% by mass or more, and particularly preferably 95% by mass or more, with respect to the total mass of the cellulose fiber-containing composition.

The form of the cellulose fiber-containing composition of the present invention is not particularly limited, and can be present in various forms such as powders, a slurry, or a solid. Among others, the cellulose fiber-containing composition is preferably a slurry, and more preferably a high-viscosity slurry. Specifically, when the solid concentration of cellulose fibers is set at 0.4% by mass and the viscosity of the cellulose fiber-containing composition is measured under conditions of 23°C and a rotation number of 3 rpm, the cellulose fiber-containing composition has a viscosity of preferably 40,000 mPa·s or less, more preferably 35,000 mPa·s or less, further preferably 30,000 mPa·s or less, and particularly preferably 25,000 mPa·s or less. Regarding the lower limit of the viscosity, the cellulose fiber-containing composition is preferably a slurry having a viscosity of 500 mPa·s or more, more preferably a slurry having a viscosity of 5,000 mPa·s or more, further preferably a slurry having a viscosity of 8,000 mPa·s or more, and particularly preferably a slurry having a viscosity of 10,000 mPa·s or more. By setting the viscosity to be the above-described upper limit or less, the cellulose fiber-containing composition favorably exhibits suppression of particles (aggregates) in coated products. By setting the viscosity to be the above-described lower limit or more, when a coating film is formed from the cellulose fiber-containing composition, the Young's modulus or strength thereof can be favorably optimized.

The viscosity of the cellulose fiber-containing composition is measured as follows. The cellulose fiber-containing composition is diluted with ion exchange water to a solid concentration of 0.4% by mass, and the obtained solution is then stirred using a disperser at 1500 rpm for 5 minutes. Subsequently, the viscosity of the thus obtained dispersed solution is measured using a type B viscometer (manufactured by BROOKFIELD; analog viscometer T-LVT). Regarding the measurement conditions, the rotation speed is set at 3 rpm, and the viscosity value 3 minutes after initiation of the measurement is defined to be the viscosity of the dispersed solution. Before the measurement, the dispersed solution as a measurement target is left at rest a whole day and night under the environment of 23°C and a relative humidity of 50%. The temperature at which the viscosity is measured is set at 23°C. Other detailed measurement conditions are in accordance with JIS Z 8803:2011. Five samples are prepared per example, and the measurement is carried out twice for each sample, namely, 10 times in total. Then, the arithmetic mean thereof is adopted.

(Coating film)

The cellulose fiber-containing composition of the present invention is preferably used in coating, so as to form a coating film. The thickness of such a coating film is not particularly limited. Taking into consideration the used form as a paint, the thickness of the coating film is preferably 1000 μm or less, more preferably 500 μm or less, further preferably 300 μm or less, still further preferably 100 μm or less, and particularly preferably 80 μm or less. The lower limit of the thickness is preferably 1 μm or more, more preferably 5 μm or more, and particularly preferably 10 μm or more.

The Young's modulus of the coating film is not particularly limited. Taking into consideration the achievement of a higher Young's modulus, the Young's modulus of the coating film is, for example, preferably 0.3 GPa or more, more preferably 0.5 GPa or more, further preferably 0.7 GPa or more, and particularly preferably 0.8 GPa or more. The upper limit of the Young's modulus is practically 8 GPa or less. Since such a high Young's modulus can be achieved according to the present invention, the present coating film can preferably correspond to intended use, which requires a high elastic modulus.

The Young's modulus of the coating film is measured in accordance with JIS P 8113:2006, using a tensile tester Tensilon (manufactured by A & D Co., Ltd.), with the exception that the length of a test piece between grippers is set at 50 mm and the tensile speed is set at 5 mm/minute. Upon the measurement of the Young's modulus, a test piece, which has been left at 23°C and at a relative humidity of 50% for 24 hours for humidity conditioning, is used. The measurement is carried out five times per sample, and the mean value thereof is adopted.

The haze of the coating film is not particularly limited, and it is preferably 4% or less, more preferably 3% or less, and particularly preferably 2% or less. The lower limit of the haze is not particularly limited, and it is practically 0.1% or more.

The haze of the coating film is a value measured in accordance with JIS K 7136:2000, using a haze meter (manufactured by MURAKAMI COLOR RESEARCH LABORATORY Co., Ltd.; HM-150).

(Method for producing film)

The step of producing a thickener, a paint, a film and the like is not particularly limited.

The thickener can be produced by mixing a dispersed solution comprising cellulose fibers having a fiber width of 1000 nm or less (which may be a slurry in some cases), a specific component or a solution comprising the same, and as necessary, other components (e.g., water) with one another.

The paint can be produced by mixing ultrafine cellulose fibers (which may also be a dispersed solution), a specific component (which may also be a solution), a resin (e.g., an acrylic resin), a hardening agent (e.g., polyisocyanate), and as necessary, other components (e.g., an organic solvent) with one another.

The film can be produced by applying a composition comprising ultrafine cellulose fibers and a specific component (e.g., the above-described paint or thickener, etc.) onto a base material to form a coating film. Specifically, a coating film can be formed, for example, by a step of applying a composition comprising ultrafine cellulose fibers and a specific component onto a base material, and a step of drying the applied composition.

The above-formed coating film may be detached from the base material to form a sheet.

Moreover such a sheet may also be produced by papermaking from a composition comprising ultrafine cellulose fibers and a specific component (which may also be the above-described paint or thickener).

< Coating step >

The coating step is a step of applying a composition comprising ultrafine cellulose fibers and a specific component (which may also be the above-described paint or thickener) onto a base material.

When a sheet is produced, the use of a coating apparatus and a long base material enables continuous production of the sheet.

The material of the base material used in the coating step is not particularly limited. A base material having higher wettability to the composition is preferable because the shrinkage of the sheet upon drying is suppressed. It is preferable to select one from which the sheet formed after drying can be easily detached. Of these, a resin film or plate, or a metal film or plate is preferable, but is not particularly limited thereto. Examples of the base material that can be used herein may include: resin films or plates, such as those made of acryl, polyethylene terephthalate, vinyl chloride, polystyrene, or polyvinylidene chloride; metal films or plates, such as those made of aluminum, zinc, copper, or iron; these films or plates obtained by the oxidation treatment of surfaces thereof; and stainless films or plates and brass films or plates.

When the composition to be used in coating has a low viscosity and spreads on the base material in the coating step, a damming frame may be fixed and used on the base material in order to obtain a sheet having a predetermined thickness and basis weight. The quality of the damming frame is not particularly limited, and it is preferable to select ones from which the edges of the sheet that adhere after drying can be easily detached. Of these, frames formed from resin plates or metal plates are preferable, without particular limitation. Example thereof that can be used herein may include frames formed from resin plates such as acrylic plates, polyethylene terephthalate plates, vinyl chloride plates, polystyrene plates, polypropylene plates, and polyvinylidene chloride plates; from metal plates such as aluminum plates, zinc plates, copper plates, and iron plates; from plates obtained by the oxidation treatment of surfaces thereof; and from stainless plates and brass plates.

Examples of a coater that can be used herein to apply the composition onto the base material may include applicators, roll coaters, gravure coaters, die coaters, curtain coaters, and air doctor coaters. Applicators, die coaters, curtain coaters, and spray coaters are preferable because these coaters can provide more even thickness.

The coating temperature is not particularly limited, and it is preferably 20°C or higher and 45°C or lower, more preferably 25°C or higher and 40°C or lower, and further preferably 27°C or higher and 35°C or lower. When the coating temperature is equal to or higher than the above-described lower limit value, it is possible to easily apply the composition onto the base material. When the coating temperature is equal to or lower than the above-described upper limit value, it is possible to suppress volatilization of the dispersion medium upon coating.

In the coating step, it is preferable to apply the composition onto the base material, so as to achieve a finished basis weight of the sheet that is 10 g/$m^2$ or more and 100 g/$m^2$ or less, and preferably, 20 g/$m^2$ or more and 60 g/$m^2$ or less. By applying the composition so as to achieve a basis weight that is within the above-described range, a sheet having excellent strength can be obtained.

The coating step preferably includes a step of drying the composition applied onto the base material. The drying method is not particularly limited, and either a contactless drying method or a method of drying the sheet while locking the sheet may be used, or these methods may also be used in combination.

The contactless drying method is not particularly limited, and a method for drying by heating with hot air, infrared radiation, far-infrared radiation, or near-infrared radiation (a drying method by heating) or a method for drying in vacuum (a vacuum drying method) can be utilized. Although the drying method by heating and the vacuum drying method may

be combined, the drying method by heating is usually utilized. The drying with infrared radiation, far-infrared radiation, or near-infrared radiation can be performed using an infrared apparatus, a far-infrared apparatus, or a near-infrared apparatus without particular limitations. The heating temperature for the drying method by heating is not particularly limited, and it is preferably 20°C or higher and 150°C or lower, and more preferably 25°C or higher and 105°C or lower. At the heating temperature equal to or higher than the above-described lower limit value, the dispersion medium can be rapidly volatilized. At the heating temperature equal to or lower than the above-described upper limit value, cost required for the heating can be reduced, and the thermal discoloration of the ultrafine cellulose fibers can be suppressed.

< Papermaking step >

In the case of producing a sheet, the step of producing the sheet may include a step of papermaking from a composition comprising ultrafine cellulose fibers and a specific component (which may also be the above-described paint or thickener). Examples of a paper machine used in the papermaking step may include continuous paper machines such as a Fourdrinier paper machine, a cylinder paper machine, and an inclined paper machine, and a multilayer combination paper machine, which is a combination thereof. Known papermaking such as papermaking by hand may be carried out in the papermaking step.

In the papermaking step, the above-described composition is wire-filtered and dehydrated to obtain a sheet that is in a wet state. The sheet that is in a wet state is then pressed and dried to obtain a sheet. Upon filtration and dehydration of the composition, a filter fabric for filtration is not particularly limited. It is important that ultrafine cellulose fibers or antiseptics do not pass through the filter fabric and the filtration speed is not excessively slow. Such filter fabric is not particularly limited, and a sheet, a woven fabric or a porous membrane, each consisting of an organic polymer, is preferable. Preferred examples of the organic polymer may include, but are not particularly limited to, non-cellulose organic polymers such as polyethylene terephthalate, polyethylene, polypropylene, and polytetrafluoroethylene (PTFE). Specific examples thereof may include, but are not particularly limited to, a polytetrafluoroethylene porous membrane having a pore size of 0.1 μm or more and 20 μm or less, for example, 1 μm, and woven fabric made of polyethylene terephthalate or polyethylene having a pore size of 0.1 μm or more and 20 μm or less, for example, 1 μm.

The method for producing a sheet from the above-described composition is not particularly limited, and an example thereof is the method disclosed in WO 2011/013567 comprising using a production apparatus. This production apparatus comprises a dewatering section for ejecting an ultrafine cellulose fiber-containing composition onto the upper surface of an endless belt and then dewatering a dispersion medium contained in the ejected composition to form a web, and a drying section for drying the web to produce a fiber sheet. The endless belt is provided across from the dewatering section to the drying section, and the web formed in the dewatering section is transferred to the drying section while being placed on the endless belt.

The dehydration method that can be adopted in the present invention is not particularly limited. An example of the method is a dehydration method conventionally used for paper production. A preferred example is a method comprising performing dehydration using a Fourdrinier, cylinder, tilted wire, or the like and then performing dehydration using a roll press. In addition, a drying method is not particularly limited, and an example thereof is a method used for paper production and for example a method using a cylinder dryer, a yankee dryer, hot air drying, a near-infrared heater, or an infrared heater is preferable.

(Laminate)

A laminate may be formed by further laminating an additional layer on the coating film or sheet obtained in the aforementioned step. Such an additional layer may be provided on both surfaces of the coating film or sheet, or may also be provided on one surface of the coating film or sheet. Examples of the additional layer that is laminated on at least one surface of the coating film or sheet may include a resin layer and an inorganic layer.

Specific examples of the laminate may include: a laminate in which a resin layer is directly laminated on at least one surface of a coating film or sheet; a laminate in which an inorganic layer is directly laminated on at least one surface of a coating film or sheet; a laminate in which a resin layer, a coating film or sheet and an inorganic layer are laminated in this order; a laminate in which a coating film or sheet, a resin layer and an inorganic layer are laminated in this order; and a laminate in which a coating film or sheet, an inorganic layer and a resin layer are laminated in this order. The layer configuration of the laminate is not limited to the above-described examples, and the laminate can have various aspects, depending on intended use.

< Resin layer >

The resin layer is a layer that has a natural resin or a synthetic resin as a main component. In this context, the main component refers to a component comprised in 50% by mass or more, based on the total mass of the resin layer.

The content of the resin is preferably 60% by mass or more, more preferably 70% by mass or more, further preferably 80% by mass or more, and particularly preferably 90% by mass or more, based on the total mass of the resin layer. It is to be noted that the content of the resin may be set at 100% by mass, or may also be set at 95% by mass or less.

Examples of natural resins may include rosin-based resins, such as rosin, rosin ester and hydrated rosin ester.

The synthetic resin is preferably at least one selected from, for example, polycarbonate resins, polyethylene terephthalate resins, polyethylene naphthalate resins, polyethylene resins, polypropylene resins, polyimide resins, polystyrene resins, polyurethane resins and acrylic resins. Among them, the synthetic resin is preferably at least one selected from polycarbonate resins and acrylic resins, and more preferably a polycarbonate resin. It is to be noted that the acrylic resin is preferably at least any one selected from polyacrylonitrile and poly(meth)acrylate.

Examples of the polycarbonate resin, which constitutes the resin layer, may include aromatic polycarbonate-based resins and aliphatic polycarbonate-based resins. These specific polycarbonate-based resins are known, and a polycarbonate-based resin described in JP-A-2010-023275 is included, for example.

One resin that constitutes the resin layer may be used alone, or a copolymer obtained by copolymerization or graft polymerization of a plurality of resin components may be used. Alternatively, a plurality of resin components may be mixed by a physical process and used as a blend material.

An adhesive layer may be provided between the coating film or sheet and the resin layer, or the coating film or sheet and the resin layer may directly adhere to each other without providing an adhesive layer. When an adhesive layer is provided between the coating film or sheet and the resin layer, examples of adhesives, which constitute the adhesive layer, may include acrylic resins. Examples of adhesives other than acrylic resins may include vinyl chloride resins, (meth)acrylic acid ester resins, styrene/acrylic acid ester copolymer resins, vinyl acetate resins, vinyl acetate/(meth)acrylic acid ester copolymer resins, urethane resins, silicone resins, epoxy resins, ethylene/vinyl acetate copolymer resins, polyester-based resins, polyvinyl alcohol resins, ethylene vinyl alcohol copolymer resins, and rubber-based emulsions such as SBR and NBR.

When no adhesive layer is provided between the coating film or sheet and the resin layer, the resin layer may have an adhesion aid, or the surface of the resin layer may be surface-treated by a hydrophilization treatment or the like.

Examples of the adhesion aid may include compounds containing at least one selected from an isocyanate group, a carbodiimide group, an epoxy group, an oxazoline group, an amino group and a silanol group, and organic silicon compounds. Among them, the adhesion aid is preferably at least one selected from a compound containing an isocyanate group (isocyanate compound) and an organic silicon compound. Examples of the organic silicon compound may include silane coupling agent condensates and silane coupling agents.

Examples of the surface treatment method other than the hydrophilic treatment may include a corona treatment, a plasma discharge treatment, a UV irradiation treatment, an electron beam irradiation treatment, and a flame treatment.

< Inorganic layer >

Substances constituting the inorganic layer are not particularly limited, and examples thereof may include aluminum, silicon, magnesium, zinc, tin, nickel, and titanium; oxides, carbides, nitrides, oxycarbides, oxynitrides, and oxycarbonitrides thereof; and mixtures thereof. From the viewpoint that high moisture resistance can be stably maintained, silicon oxide, silicon nitride, silicon oxycarbide, silicon oxynitride, silicon oxycarbonitride, aluminum oxide, aluminum nitride, aluminum oxycarbide, aluminum oxynitride, or mixtures thereof are preferable.

A method of forming an inorganic layer is not particularly limited. In general, methods of forming a thin film are roughly classified into Chemical Vapor Deposition (CVD) and Physical Vapor Deposition (PVD), either of which may be employed. Specific examples of CVD methods may include plasma CVD, which utilizes plasma, and Catalyst Chemical Vapor Deposition (Cat-CVD) including catalytically cracking material gas using a heated catalyzer. Specific examples of PVD methods may include vacuum deposition, ion plating, and sputtering.

As a method of forming an inorganic layer, Atomic Layer Deposition (ALD) can also be employed. The ALD method is a method of forming a thin film in an atomic layer unit by alternately supplying each of source gases of elements constituting the film to be formed to the surface on which a layer is to be formed. This method, albeit disadvantageous in a slow deposition rate, can more smoothly cover even a surface having a complicated shape than the plasma CVD method and has the advantage that a thin film having fewer defects can be formed. The ALD method also has the advantage that this method can control a film thickness at a nano order and can relatively easily cover a wide surface, for example. The ALD method can be further expected to improve a reaction rate, to achieve a low-temperature process, and to decrease unreacted gas, by using plasma.

(Intended use)

The cellulose-containing composition of the present invention can be used as a thickener for various intended uses.

Moreover, the cellulose fiber-containing composition of the present invention may also be used as a reinforcing material, by being mixed with, for example, a paint, a resin, an emulsion, a hydraulic material (cement), or a rubber.

Using the cellulose-containing composition of the present invention, various types of coating films or sheets may also be produced.

The sheet is suitable for intended uses such as light transmissive substrates for various display devices, various solar cells, and the like. In addition, the sheet of the present invention is also suitable for intended uses, such as substrates of electronic devices, components of consumer electronics, window materials of various types of vehicles or buildings, interior materials, exterior materials, and wrapping materials. Moreover, the sheet of the present invention is also suitable for intended uses, such as threads, filters, woven fabrics, buffering materials, sponges, and polishing materials, and also, other intended uses, in which the sheet itself is used as a reinforcing material.

## Examples

The characteristics of the present invention will be more specifically described in the following examples and comparative examples. The materials, used amounts, ratios, treatment contents, treatment procedures, etc. can be appropriately modified, unless they are deviated from the gist of the present invention. Accordingly, the scope of the present invention should not be restrictively interpreted by the following specific examples. Besides, taking into consideration convenience for explanation in the following Examples, a slurry obtained by treating ultrafine cellulose fibers is referred to as a dispersed solution, and a composition comprising such a dispersed solution and a specific component(s) is referred to as a cellulose fiber-containing composition. Also, a mixture of a cellulose fiber-containing composition, a resin, a hardening agent and the like is referred to as a paint. However, the scope of the present invention should not be restrictively interpreted by the aforementioned definitions. For example, a mixture of ultrafine cellulose fibers, a specific component(s) and other components, such as a paint, is also included in the scope of the cellulose fiber-containing composition of the present invention.

### < Production of ultrafine cellulose fiber-dispersed solution (1) >

(Phosphorylation step)

The needle bleached kraft pulp manufactured by Oji Paper Co., Ltd. (solid content: 93% by mass; basis weight: 208 g/$m^2$, sheet-shaped; and Canadian Standard Freeness (CSF) measured according to JIS P 8121 after defibration is 700 ml) was used as a raw material pulp. A phosphorylation treatment was performed on this raw material pulp as follows. First, a mixed aqueous solution of ammonium dihydrogen phosphate and urea was added to 100 parts by mass (absolute dry mass) of the above raw material pulp, and the obtained mixture was adjusted to result in 45 parts by mass of the ammonium dihydrogen phosphate, 120 parts by mass of the urea and 150 parts by mass of water, so as to obtain a chemical-impregnated pulp. Subsequently, the obtained chemical-impregnated pulp was heated in a hot-air dryer of 165°C for 200 seconds, so that phosphoric acid groups were introduced into cellulose in the pulp, thereby obtaining a phosphorylated pulp. Subsequently, a washing treatment was performed on the obtained phosphorylated pulp. The washing treatment was carried out by repeating the operation to pour 10 L of ion exchange water onto 100 g (absolute dry mass) of the phosphorylated pulp to obtain a pulp dispersed solution, which was then uniformly dispersed by stirring, followed by filtration and dehydration. The washing was terminated at a time point at which the electric conductivity of the filtrate became 100 $\mu$S/cm or less.

Subsequently, an alkali treatment was performed on the phosphorylated pulp after the washing as follows. First, the phosphorylated pulp after the washing was diluted with 10 L of ion exchange water, and then, while stirring, a 1 N sodium hydroxide aqueous solution was slowly added to the diluted solution to obtain a phosphorylated pulp slurry having a pH value of 12 or more and 13 or less. Thereafter, the phosphorylated pulp slurry was dehydrated, so as to obtain an alkali-treated phosphorylated pulp.

Subsequently, the above-described washing treatment was performed on the phosphorylated pulp after the alkali treatment.

The infrared absorption spectrum of the thus obtained phosphorylated pulp was measured by FT-IR. As a result, absorption based on the phosphoric acid groups was observed around 1230 $cm^{-1}$, and thus, addition of the phosphoric acid groups to the pulp was confirmed. In addition, the amount of phosphoric acid groups (the amount of strong acid groups) measured by the after-mentioned measurement method was 1.45 mmol/g.

Moreover, the obtained phosphorylated pulp was analyzed using an X-ray diffractometer. As a result, it was confirmed that there were typical peaks at two positions near $2\theta$ = 14° or more and 17° or less, and near $2\theta$ = 22° or more and 23° or less. Thus, the phosphorylated pulp was confirmed to have cellulose type I crystals.

(Defibration treatment)

Ion exchange water was added to the obtained phosphorylated pulp, so as to prepare a slurry having a solid concentration of 2% by mass. This slurry was treated using a wet atomization apparatus (manufactured by Sugino Machine Limited, Star Burst) at a pressure of 200 MPa three times to obtain an ultrafine cellulose fiber-dispersed solution (1) comprising ultrafine cellulose fibers. It was confirmed according to X-ray diffraction that these ultrafine cellulose fibers maintained cellulose type I crystals.
Moreover, the fiber width of the ultrafine cellulose fibers was measured using a transmission electron microscope according to the following measurement method. As a result, the fiber width was 3 to 5 nm.
Besides, the viscosity of the above-described ultrafine cellulose fibers having a solid concentration of 0.4% by mass was measured. As a result, the viscosity was 22400 [mPa·s].

< Measurement of fiber width >

The fiber width of ultrafine cellulose fibers was measured by the following method.
A supernatant of the ultrafine cellulose fiber-dispersed solution as obtained above by the treatment using a wet atomization apparatus was diluted with water, so that the concentration of the ultrafine cellulose fibers became 0.01% by mass or more and 0.1% by mass or less. The obtained solution was then added dropwise onto a hydrophilized carbon grid film. After drying, it was stained with uranyl acetate, and was then observed under a transmission electron microscope (manufactured by JEOL; JEOL-2000EX).

< Production of ultrafine cellulose fiber-dispersed solution (2) >

(TEMPO oxidation step)

As a raw material pulp, the needle bleached kraft pulp (undried) manufactured by Oji Paper Co., Ltd. was used. An alkali TEMPO oxidation treatment was performed on this raw material pulp as follows. First, the above-described raw material pulp corresponding to 100 parts by mass (dry mass), 1.6 parts by mass of TEMPO (2,2,6,6-tetramethylpiperidin-1-oxyl), and 10 parts by mass of sodium bromide were dispersed in 10000 parts by mass of water. Subsequently, an aqueous solution containing 13% by mass of sodium hypochlorite was added to the obtained solution, such that the amount of sodium hypochlorite became 3.8 mmol with respect to 1.0 g of the pulp, so as to start the reaction. During the reaction, the pH was kept at pH 10 or more and pH 10.5 or less by the dropwise addition of a 0.5 M sodium hydroxide aqueous solution. The time point at which change in the pH was no longer seen was considered to be termination of the reaction.
Subsequently, a washing treatment was performed on the obtained TEMPO-oxidized pulp. The washing treatment was carried out by repeating the operation of dehydrating the pulp slurry after the TEMPO oxidation to obtain a dehydrated sheet, then pouring 5000 parts by mass of ion exchange water onto the dehydrated sheet, which was then uniformly dispersed by stirring, and was then subjected to filtration and dehydration. The washing was terminated at a time point at which the electric conductivity of the filtrate became 100 μS/cm or less.
With respect to this dehydrated sheet, an additional oxidation treatment was performed on the remaining aldehyde groups as follows. The above-described dehydrated sheet corresponding to 100 parts by mass (dry mass) was dispersed in 10000 parts by mass of a 0.1 mol/L acetate buffer (pH 4.8). Thereafter, 113 parts by mass of 80% sodium chlorite was added thereto, and the reaction system was immediately hermetically sealed. While the reaction mixture was stirred at 500 rpm using a magnetic stirrer, it was reacted at room temperature for 48 hours to obtain a pulp slurry.
Subsequently, a washing treatment was performed on the TEMPO-oxidized pulp obtained after the additional oxidation. The washing treatment was carried out by repeating the operation of dehydrating the pulp slurry after the additional oxidation to obtain a dehydrated sheet, then pouring 5000 parts by mass of ion exchange water onto the dehydrated sheet, which was then uniformly dispersed by stirring, and was then subjected to filtration and dehydration. The washing was terminated at a time point at which the electric conductivity of the filtrate became 100 μS/cm or less.
The amount of carboxyl groups in the thus obtained TEMPO-oxidized pulp, which was measured by the aftermentioned method, was 1.30 mmol/g.
The obtained TEMPO-oxidized pulp was analyzed using an X-ray diffractometer. As a result, it was confirmed that there were typical peaks at two positions near $2\theta$ = 14° or more and 17° or less, and near $2\theta$ = 22° or more and 23° or less. Thus, the TEMPO-oxidized pulp was confirmed to have cellulose type I crystals.

(Defibration treatment)

Ion exchange water was added to the obtained phosphorylated pulp, so as to prepare a slurry having a solid concentration of 2% by mass. This slurry was treated using a wet atomization apparatus (manufactured by Sugino Machine Limited, Star Burst) at a pressure of 200 MPa six times to obtain an ultrafine cellulose fiber-dispersed solution (2) comprising ultrafine cellulose fibers. It was confirmed according to X-ray diffraction that these ultrafine cellulose fibers maintained cellulose type I crystals. Moreover, the fiber width of the ultrafine cellulose fibers was measured using a transmission electron microscope, and as a result, the fiber width was 3 to 5 nm.
Besides, the viscosity of the above-described ultrafine cellulose fibers having a solid concentration of 0.4% by mass was measured. As a result, the viscosity was 11000 [mPa·s].

< Production of ultrafine cellulose fiber-dispersed solution (3) >

To the ultrafine cellulose fiber-dispersed solution (1), an enzyme-containing solution (manufactured by AB Enzymes, ECOPULP R; enzyme content: approx. 5% by mass) was added in an amount of 3.0 x $10^{-6}$ parts by mass with respect to 1 part by mass of the ultrafine cellulose fibers, and the obtained mixture was then stirred at a rotation of 18,500 rpm for 2 minutes. Thereafter, the reaction mixture was recovered, so as to obtain an ultrafine cellulose fiber-dispersed solution (3). The ultrafine cellulose fiber-dispersed solution (3) comprises an enzyme.
Besides, the viscosity of the above-described ultrafine cellulose fibers having a solid concentration of 0.4% by mass was measured, and as a result, the viscosity was 9000 [mPa·s].

[Table 1]

| | Chemical treatment method | Number of fibrillation treatments [times] | Substituent amount [mmol/g] | 0.4-mass-% CNF viscosity [mPa·s] | Supernatant yield*1 [mass %] to solid content | Post-fibrillation treatment |
|---|---|---|---|---|---|---|
| Ultrafine cellulose fiber-dispersed solution (1) | Phosphorylation | 3 | 1.45 | 22,400 | 99.4 | - |
| Ultrafine cellulose fiber-dispersed solution (2) | TEMPO oxidation | 6 | 1.30 | 11,000 | 93.1 | - |
| Ultrafine cellulose fiber-dispersed solution (3) | Phosphorylation | 3 | 1.45 | 9,000 | 99.9 | Enzyme treatment |
| *1: Supernatant yield after centrifugation of ultrafine cellulose fiber-dispersed solution CNF: Ultrafine cellulose fibers | | | | | | |

The physical properties of individual ultrafine cellulose fibers were measured in accordance with the following procedures. The results are shown in the above Table 1.

< Measurement of amount of phosphoric acid groups >

The amount of phosphoric acid groups in the ultrafine cellulose fibers was measured by treating with an ion exchange resin, a cellulose fiber-containing slurry prepared by diluting the ultrafine cellulose fiber-dispersed solution comprising ultrafine cellulose fibers as targets with ion exchange water to result in a content of 0.2% by mass, and then performing titration using alkali.
In the treatment with the ion exchange resin, 1/10 by volume of a strongly acidic ion exchange resin (Amberjet 1024; manufactured by Organo Corporation; conditioned) was added to the aforementioned cellulose fiber-containing slurry, and the resultant mixture was shaken for 1 hour. Then, the mixture was poured onto a mesh having 90-μm apertures to separate the resin from the slurry.
In the titration using alkali, a change in the electric conductivity value indicated by the slurry was measured while adding an aqueous solution of 0.1 N sodium hydroxide, once 30 seconds, in each amount of 50 μL, to the cellulose

fiber-containing slurry after completion of the treatment with the ion exchange resin. Specifically, among the calculation results, the alkali amount (mmol) required in a region corresponding to the first region shown in Figure 1 was divided by the solid content (g) in the slurry to be titrated, so as to obtain the amount of phosphoric acid groups (mmol/g).

< Measurement of amount of carboxyl groups >

The amount of carboxyl groups in the ultrafine cellulose fibers was measured by treating with an ion exchange resin, a cellulose fiber-containing slurry prepared by diluting the ultrafine cellulose fiber-dispersed solution comprising ultrafine cellulose fibers as targets with ion exchange water to result in a content of 0.2% by mass, and then performing titration using alkali.

In the treatment with the ion exchange resin, 1/10 by volume of a strongly acidic ion exchange resin (Amberjet 1024; manufactured by Organo Corporation; conditioned) was added to the aforementioned cellulose fiber-containing slurry, and the resultant mixture was shaken for 1 hour. Then, the mixture was poured onto a mesh having 90-μm apertures to separate the resin from the slurry.

In the titration using alkali, a change in the electric conductivity value indicated by the slurry was measured while adding an aqueous solution of 0.1 N sodium hydroxide, once 30 seconds, in each amount of 50 μL, to the cellulose fiber-containing slurry after completion of the treatment with the ion exchange resin. Specifically, among the calculation results, the alkali amount (mmol) required in a region corresponding to the first region shown in Figure 2 was divided by the solid content (g) in the slurry to be titrated, so as to obtain the amount of carboxyl groups (mmol/g).

< Measurement of viscosity of ultrafine cellulose fiber-dispersed solution >

The viscosity of the ultrafine cellulose fiber-dispersed solution was measured as follows. First, the ultrafine cellulose fiber-dispersed solution was diluted with ion exchange water to a solid concentration of 0.4% by mass, and the obtained solution was then stirred using a disperser at 1500 rpm for 5 minutes. Subsequently, the viscosity of the thus obtained dispersed solution was measured using a type B viscometer (manufactured by BROOKFIELD; analog viscometer T-LVT). Regarding the measurement conditions, the rotation speed was set at 3 rpm, and the viscosity value 3 minutes after initiation of the measurement was defined to be the viscosity of the dispersed solution. Before the measurement, the dispersed solution as a measurement target was left at rest a whole day and night under the environment of 23°C and a relative humidity of 50%. The temperature at which the viscosity was measured was set at 23°C. Other detailed measurement conditions were in accordance with JIS Z 8803:2011. Five samples were prepared per example, and the measurement was carried out twice for each sample, namely, 10 times in total. Then, the arithmetic mean thereof was adopted.

< Measurement of supernatant yield after centrifugation of ultrafine cellulose fiber-dispersed solution >

The yield of a supernatant obtained after completion of the centrifugation of the ultrafine cellulose fiber-dispersed solution was measured according to the following method. The supernatant yield obtained after completion of the centrifugation serves as an indicator of the yield of ultrafine cellulose fibers. The higher the supernatant yield, the higher the yield of ultrafine cellulose fibers that can be obtained.

The ultrafine cellulose fiber-dispersed solution was adjusted to a solid concentration of 0.2% by mass, and was then centrifuged using a high speed refrigerated centrifuge (manufactured by KOKUSAN Co. Ltd., H-2000B) under conditions of 12000 G for 10 minutes. The obtained supernatant was recovered, and the solid concentration in the supernatant was then measured. After that, the yield of the ultrafine cellulose fibers was obtained according to the following equation:

$$\text{Supernatant yield (\%)} = \text{solid concentration (\%) in supernatant} / 0.2 \times 100$$

Five samples were prepared per example, and the measurement was carried out twice for each sample, namely, 10 times in total. Then, the arithmetic mean thereof was adopted.

< Example 1 >

(Preparation of cellulose fiber-containing composition)

Ion exchange water was added to trehalose (manufactured by Wako Pure Chemical Industries, Ltd.) to prepare

an aqueous solution having a solid concentration of 2% by mass.

The ultrafine cellulose fiber-dispersed solution (1) (100 g) having a solid concentration of 2% by mass was weighed into a beaker, and thereafter, 360 g of ion exchange water and 40 g of the trehalose aqueous solution (2% by mass) were added to the beaker. Such addition was carried out, while stirring at 1500 rpm using a T.K. Homodisper (manufactured by Tokushu Kika Kogyo Co., Ltd.). After addition of trehalose, the reaction mixture was further stirred for 5 minutes, and thereafter, a defoaming treatment was carried out using a defoaming device (manufactured by THINKY CORPORATION; planetary centrifugal mixer AR-250).

Thereby, a cellulose fiber-containing composition having a solid concentration of ultrafine cellulose fibers that was 0.4% by mass, a solid concentration of trehalose that was 0.16%, wherein the ratio between the ultrafine cellulose fibers and the trehalose was 100 : 40 (mass ratio), was obtained.

(Measurement of viscosity of cellulose fiber-containing composition)

The viscosity of the obtained cellulose fiber-containing composition was measured using a type B viscometer (manufactured by BROOKFIELD; analog viscometer T-LVT), after the cellulose fiber-containing composition had been left at rest a whole day and night under the environment of 23°C and a relative humidity of 50%. Regarding the measurement conditions, the rotation speed was set at 3 rpm, and the viscosity value 3 minutes after initiation of the measurement was defined to be the viscosity of the dispersed solution. The temperature at which the viscosity was measured was set at 23°C. Other detailed measurement conditions were in accordance with JIS Z 8803:2011. Five samples were prepared per example, and the measurement was carried out twice for each sample, namely, 10 times in total. Then, the arithmetic mean thereof was adopted.

(Preparation of paint)

The obtained cellulose fiber-containing composition (24.8 g) was weighed into a beaker, and thereafter, 34.6 g of ion exchange water, 35.1 g of an acrylic resin (manufactured by DIC; product name: BURNOCK WD-551; solid concentration: 44.1%), and 5.5 g of a hardening agent (manufactured by DIC; product name: BURNOCK DNW-5500; polyisocyanate; solid concentration: 79.8%) were added to the beaker in this order. Such addition was carried out, while stirring at 1500 rpm using a T.K. Homodisper (manufactured by Tokushu Kika Kogyo Co., Ltd.), and after addition of all of the components, the mixture was further stirred for 5 minutes. Thereafter, a defoaming treatment was carried out using a defoaming device (manufactured by THINKY CORPORATION; planetary centrifugal mixer AR-250).

Thus, a paint to be evaluated, in which the solid content ratio of the acrylic resin, the hardening agent, the ultrafine cellulose fibers, and the trehalose was 78 : 22 : 0.5 : 0.2 (mass ratio) and the concentration of the total solid content was 20% by mass, was obtained.

< Example 2 >

A paint to be evaluated was obtained in the same manner as that of Example 1, with the exception that an aqueous solution containing 2% by mass of urea (manufactured by Wako Pure Chemical Industries, Ltd.) was used instead of trehalose.

< Example 3 >

A paint to be evaluated was obtained in the same manner as that of Example 1, with the exception that an aqueous solution containing 2% by mass of guanidine phosphate (manufactured by Sanwa Chemical Co., Ltd.; product name: Apinon 307) was used instead of trehalose.

< Example 4 >

A paint to be evaluated was obtained in the same manner as that of Example 1, with the exception that an aqueous solution containing 2% by mass of guanidine hydrochloride (manufactured by Sanwa Chemical Co., Ltd.; product name: GH-L) was used instead of trehalose.

< Example 5 >

A paint to be evaluated was obtained in the same manner as that of Example 1, with the exception that an aqueous solution containing 2% by mass of guanidine sulfamate (manufactured by Sanwa Chemical Co., Ltd.; product name: Apinon 145) was used instead of trehalose.

< Example 6 >

A paint to be evaluated was obtained in the same manner as that of Example 1, with the exception that an aqueous solution containing 2% by mass of the pigment dispersing agent DISPWERBYK-187 (manufactured by BYK; alkylol ammonium salt; acid value: 35 mgKOH/g; amine value: 35 mgKOH/g) was used instead of trehalose.

< Example 7 >

A paint to be evaluated was obtained in the same manner as that of Example 1, with the exception that an aqueous solution containing 2% by mass of the pigment dispersing agent DISPWERBYK-180 (manufactured by BYK; alkylol ammonium salt; acid value: 94 mgKOH/g; amine value: 94 mgKOH/g) was used instead of trehalose.

< Example 8 >

A paint to be evaluated was obtained in the same manner as that of Example 1, with the exception that an aqueous solution containing 2% by mass of the pigment dispersing agent DISPWERBYK (manufactured by BYK; alkylol ammonium salt; acid value: 85 mgKOH/g; amine value: 85 mgKOH/g) was used instead of trehalose.

< Example 9 >

A paint to be evaluated was obtained in the same manner as that of Example 1, with the exception that an aqueous solution containing 2% by mass of the pigment dispersing agent DISPER-AW300P (manufactured by Otsuka Chemical Co., Ltd.; methacrylate resin potassium salt; acid value: 120 mgKOH/g) was used instead of trehalose.

< Example 10 >

A paint to be evaluated was obtained in the same manner as that of Example 1, with the exception that the ultrafine cellulose fiber-dispersed solution (2) was used.

< Example 11 >

A paint to be evaluated was obtained in the same manner as that of Example 3, with the exception that the ultrafine cellulose fiber-dispersed solution (2) was used.

< Example 12 >

A paint to be evaluated was obtained in the same manner as that of Example 6, with the exception that the ultrafine cellulose fiber-dispersed solution (2) was used.

< Example 13 >

A paint to be evaluated was obtained in the same manner as that of Example 1, with the exceptions that the solid content ratio between ultrafine cellulose fibers and trehalose in the cellulose fiber-containing composition was set at 100 : 20 (mass ratio), and that 24.9 g of the cellulose fiber-containing composition, 34.5 g of ion exchange water, and 35.2 g of an acrylic resin were used to prepare the paint.
(The solid content ratio of the acrylic resin, the hardening agent, the ultrafine cellulose fibers and the trehalose in the obtained paint to be evaluated is 78 : 22 : 0.5 : 0.1 (mass ratio), respectively.)

< Example 14 >

A paint to be evaluated was obtained in the same manner as that of Example 1, with the exceptions that the solid content ratio between ultrafine cellulose fibers and trehalose in the cellulose fiber-containing composition was set at 100 : 160 (mass ratio), and that 24.7 g of a water dispersion, 35 g of ion exchange water, 34.9 g of an acrylic resin and 5.4 g of a hardening agent were used to prepare a paint.
(The solid content ratio of the aciylic resin, the hardening agent, the ultrafine cellulose fibers and the trehalose in the obtained paint to be evaluated is 78 : 22 : 0.5 : 0.8 (mass ratio), respectively.)

< Example 15 >

The ultrafine cellulose fiber-dispersed solution (3) (24.9 g) having a solid concentration of 0.4% by mass was weighed into a beaker, and thereafter, 34.4 g of ion exchange water, 35.2 g of an acrylic resin, and 5.5 g of a hardening agent were added to the beaker in this order. Such addition was carried out, while stirring at 1500 rpm using a T.K. Homodisper (manufactured by Tokushu Kika Kogyo Co., Ltd.), and after addition of all of the components, the mixture was further stirred for 5 minutes.

Thus, a paint to be evaluated, in which the solid content ratio of the acrylic resin, the hardening agent, and the ultrafine cellulose fibers was 78 : 22 : 0.5 (mass ratio), was obtained. The cellulose fiber-containing composition of Example 15 comprises an enzyme.

< Example 16 >

A paint to be evaluated was obtained in the same manner as that of Example 1, with the exception that the ultrafine cellulose fiber-dispersed solution (3) was used. The cellulose fiber-containing composition of Example 16 comprises an enzyme.

< Example 17 >

A paint to be evaluated was obtained in the same manner as that of Example 3, with the exception that the ultrafine cellulose fiber-dispersed solution (3) was used. The cellulose fiber-containing composition of Example 17 comprises an enzyme.

< Example 18 >

A paint to be evaluated was obtained in the same manner as that of Example 6, with the exception that the ultrafine cellulose fiber-dispersed solution (3) was used. The cellulose fiber-containing composition of Example 18 comprises an enzyme.

< Comparative Example 1 >

A paint to be evaluated was obtained in the same manner as that of Example 15, with the exception that the ultrafine cellulose fiber-dispersed solution (1) was used.

< Comparative Example 2 >

A paint to be evaluated was obtained in the same manner as that of Example 3, with the exception that the paint was prepared according to the following procedures, without previously mixing the ultrafine cellulose fiber-dispersed solution with guanidine phosphate.

First, 35.1 g of an acrylic resin was weighed into a beaker, and thereafter, 32.6 g of ion exchange water, 24.8 g of the ultrafine cellulose fiber-dispersed solution (1) having a solid concentration of 0.4% by mass, 2 g of an aqueous solution containing 2% by mass of guanidine phosphate, and 5.5 g of a hardening agent were added to the beaker in this order. Such addition was carried out, while stirring at 1500 rpm using a T.K. Homodisper (manufactured by Tokushu Kika Kogyo Co., Ltd.), and after addition of all of the components, the mixture was further stirred for 5 minutes. Thereafter, a defoaming treatment was carried out using a defoaming device (manufactured by THINKY CORPORATION; planetary centrifugal mixer AR-250).

< Comparative Example 3 >

A paint to be evaluated was obtained in the same manner as that of Example 3, with the exception that the paint was prepared according to the following procedures, without previously mixing the ultrafine cellulose fiber-dispersed solution with guanidine phosphate.

First, 35.1 g of an acrylic resin was weighed into a beaker, and thereafter, 32.6 g of ion exchange water, 2 g of an aqueous solution containing 2% by mass of guanidine phosphate, 24.8 g of the ultrafine cellulose fiber-dispersed solution (1) having a solid concentration of 0.4% by mass, and 5.5 g of a hardening agent were added to the beaker in this order. Such addition was carried out, while stirring at 1500 rpm using a T.K. Homodisper (manufactured by Tokushu Kika Kogyo Co., Ltd.), and after addition of all of the components, the mixture was further stirred for 5 minutes. Thereafter, a defoaming treatment was carried out using a defoaming device (manufactured by THINKY CORPORATION; planetary

centrifugal mixer AR-250).

< Comparative Example 4 >

A paint to be evaluated was obtained in the same manner as that of Example 3, with the exception that the paint was prepared according to the following procedures.

First, 35.1 g of an acrylic resin was weighed into a beaker, and thereafter, 34.6 g of ion exchange water, 24.8 g of a cellulose fiber-containing composition comprising trehalose (wherein the solid concentration of the ultrafine cellulose fibers was 0.4%, the solid concentration of the trehalose was 0.08%, and the solid content ratio between the ultrafine cellulose fibers and the trehalose was 100 : 40), and 5.5 g of a hardening agent were added to the beaker in this order. Such addition was carried out, while stirring at 1500 rpm using a T.K. Homodisper (manufactured by Tokushu Kika Kogyo Co., Ltd.), and after addition of all of the components, the mixture was further stirred for 5 minutes. Thereafter, a defoaming treatment was carried out using a defoaming device (manufactured by THINKY CORPORATION; planetary centrifugal mixer AR-250).

< Reference Example >

A paint to be evaluated was obtained in the same manner as that of Example 1, with the exceptions that the ultrafine cellulose fiber-dispersed solution was not added, and that 35.2 g of an acrylic resin, 34.4 g of ion exchange water, and 5.5 g of a hardening agent were added in this order to the beaker, in order to prepare the paint.

(The solid content ratio between the acrylic resin and the hardening agent in the obtained paint to be evaluated was 78 : 22 (mass ratio).)

[Table 2-1]

| | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|
| Composition*1 | Dispersed sol.*2 | (1) | (1) | (1) | (1) | (1) | (1) | (1) | (1) | (1) | (2) |
| | Additive*3 | Trehalose | Urea | Guanidine phosphate | Guanidine hydrochloride | Guanidine SF | AA salt | AA salt | AA salt | MP salt | Trehalose |
| | Product name*4 | | | Apinon 307 | GH-L | Apinon 145 | DISPER BYK-187 | DISPER BYK-180 | DISPER BYK | AW300P | |
| Viscosity | [mPa·s] | 13840 | 23000 | 10600 | 19080 | 15780 | 16400 | 16200 | 16520 | 15680 | 6800 |
| Paint mixing ratio [parts by mass] | CNF | 0.5 | 0.5 | 0.5 | 0.5 | 0.5 | 0.5 | 0.5 | 0.5 | 0.5 | 0.5 |
| | Additive | 0.2 | 0.2 | 0.2 | 0.2 | 0.2 | 0.2 | 0.2 | 0.2 | 0.2 | 0.2 |
| | Main agent*5 | 78 | 78 | 78 | 78 | 78 | 78 | 78 | 78 | 78 | 78 |
| | Hardening agent | 22 | 22 | 22 | 22 | 22 | 22 | 22 | 22 | 22 | 22 |
| Paint-preparing procedures*6 | | A | A | A | A | A | A | A | A | A | A |
| Evaluation of particles (aggregates) [particles/mm²]*7 | | 0<br>○ | 0<br>○ | 0<br>○ | 0<br>○ | 0<br>○ | 0<br>○ | 0<br>○ | 0<br>○ | 0<br>○ | 0<br>○ |
| Properties of Coating film | | | | | | | | | | | |
| Clarity*8 | [%] | 76 | 72 | 85 | 83 | 83 | 87 | 83 | 80 | 61 | 63 |
| Haze | [%] | 1.9 | 1.9 | 1.7 | 1.8 | 1.6 | 1.7 | 1.7 | 1.7 | 1.7 | 1.7 |
| Young's modulus [GPa] | | 1.2 | 1.0 | 0.9 | 1.0 | 1.0 | 1.0 | 1.0 | 1.1 | 1.2 | 0.7 |
| Evaluation of strength | | ○ | ○ | ○ | ○ | ○ | ○ | ○ | ○ | ○ | Δ |

[Table 2-2]

| | | Ex. 11 | Ex. 12 | Ex. 13 | Ex. 14 | Ex. 15 | Ex. 16 | Ex. 17 | Ex. 18 | Comp. Ex. 1 | Comp. Ex. 2 | Comp. Ex. 3 | Comp. Ex. 4 | Ref. Ex. |
|---|---|---|---|---|---|---|---|---|---|---|---|---|---|---|
| Composition[*1] | Dispersed sol.[*2] | (2) | (2) | (1) | (1) | (3) | (3) | (3) | (3) | (1) | (1) | (1) | (1) | - |
| | Additive[*3] | Guanidine phosphate | AA salt | Trehalose | Trehalose | - | Trehalose | Guanidine phosphate | AA salt | - | Guanidinc phosphate | Guanidine phosphate | Guanidine phosphate | - |
| | Product name[*4] | Apinon 307 | DISPER BYK-187 | | | - | | Apinon 307 | DISPER BYK-187 | - | Apinon 307 | Apinon 307 | Apinon 307 | - |
| Viscosity | [mPa·s] | 5000 | 6600 | 14400 | 13600 | 9000 | 5600 | 4400 | 6800 | 22400 | 10760 | 10280 | 10000 | - |
| Paint mixing ratio [parts by mass] | CNF | 0.5 | 0.5 | 0.5 | 0.5 | 0.5 | 0.5 | 0.5 | 0.5 | 0.5 | 0.5 | 0.5 | 0.5 | |
| | Additive | 0.2 | 0.2 | 0.1 | 0.8 | - | 0.2 | 0.2 | 0.2 | - | 0.2 | 0.2 | 0.2 | |
| | Main agent[*5] | 78 | 78 | 78 | 78 | 78 | 78 | 78 | 78 | 78 | 78 | 78 | 78 | 78 |
| | Hardening agent | 22 | 22 | 22 | 22 | 22 | 22 | 22 | 22 | 22 | 22 | 22 | 22 | 22 |
| Paint-preparing procedures[*6] | | A | A | A | A | A | A | A | A | A | B | C | D | E |
| Evaluation of particles (aggregates) [particles/$mm^2$][*7] | | 0<br>○ | 0<br>○ | 0<br>○ | 0<br>○ | 0<br>○ | 0<br>○ | 0<br>○ | 0<br>○ | 4.2<br>x | 4.6<br>x | 5.0<br>x | 4.2<br>x | 0<br>○ |
| Properties of coating film | | | | | | | | | | | | | | |
| Image clarity[*8] [%] | | 80 | 86 | 68 | 75 | 91 | 91 | 90 | 89 | 8.7 | 9.7 | 11 | 12 | 92 |
| Haze | [%] | 1.7 | 1.8 | 1.9 | 1.9 | 1.5 | 1.6 | 1.6 | 1.7 | 1.9 | 2.0 | 1.9 | 1.8 | 1.5 |

(continued)

| | | Ex. 11 | Ex. 12 | Ex. 13 | Ex. 14 | Ex. 15 | Ex. 16 | Ex. 17 | Ex. 18 | Comp. Ex. 1 | Comp. Ex. 2 | Comp. Ex. 3 | Comp. Ex. 4 | Ref. Ex. |
|---|---|---|---|---|---|---|---|---|---|---|---|---|---|---|
| | Young's modulus [GPa] | 0.7 | 0.7 | 1.2 | 1.0 | 1.0 | 1.0 | 1.0 | 1.0 | 1.0 | 0.9 | 0.9 | 1.0 | 0.6 |
| | Evaluation of strength | Δ | Δ | ○ | ○ | ○ | ○ | ○ | ○ | ○ | ○ | ○ | ○ | - |

Notes regarding Table 2-1 and Table 2-2
*1: Cellulose fiber-containing composition
*2: Ultrafine cellulose fiber-dispersed solution
*3: Guanidine SF: guanidine sulfamate,
AA salt: alkylol ammonium salt,
MP salt: Methacrylate potassium salt
*4: BYK187: DISPERBYK-187,
BYK 180: DISPERBYK-180,
BYK 193: DISPERBYK-193,
BYK: DISPERBYK
*5: Acrylic resin
*6: Paint-preparing procedures ... See the following Table 3.
*7: The number of aggregates having a size of 5 μm or more (average of 20 sites)
*8: Transmitted image clarity (comb width: 0.125 mm)

[Table 3]

| | |
|---|---|
| A | Water for adjusting concentration, an acrylic resin, and a hardening agent are added in this order to a cellulose fiber-containing composition comprising 0.4% by mass of ultrafine cellulose fibers (wherein the composition may also comprise additives) to obtain a paint. |
| B | Water for adjusting concentration, an ultrafine cellulose fiber-dispersed solution, additives, and a hardening agent are added in this order to an acrylic resin to obtain a paint. |
| C | Water for adjusting concentration, additives, an ultrafine cellulose fiber-dispersed solution, and a hardening agent are added in this order to an acrylic resin to obtain a paint. |
| D | Water for adjusting concentration, a cellulose fiber-containing composition comprising 0.4% by mass of ultrafine cellulose fibers (wherein the composition may also comprise additives), and a hardening agent are added in this order to an acrylic resin to obtain a paint. |
| E | Water for adjusting concentration and a hardening agent are added in this order to an acrylic resin to obtain a paint. |

From the above-described results, it is found that when a cellulose fiber-containing composition satisfying the image clarity specified in the present invention is processed into a coating film, the number of particles (aggregates) can be improved (Example 1 to 18). In addition, it is also found that such a cellulose fiber-containing composition can realize the practically favorable Young's modulus and strength of a coating film. In contrast, in the case of cellulose fiber-containing compositions having clarity that is lower than the clarity specified in the present invention (Comparative Examples 1 to 3), it is found that when each cellulose fiber-containing composition is processed into a coating film, it is poor in terms of particles (aggregates).

(Production of coating film to be evaluated)

The obtained paint was applied onto a PET (polyethylene terephthalate) film (manufactured by Toray Industries, Inc., Lumirror T60, thickness: 75 μm) used as a base material, using an applicator, so that the thickness of a coating film after drying became 30 μm. Immediately after the application of the paint, the paint was heated in a dryer with a temperature of 80°C for 30 minutes, so as to obtain a coated product that was a hardened coating film with a PET film as a base material. Besides, the thickness of such a coating film was measured using a stylus thickness gauge (manufactured by Mahr; Millitron 1202 D), and an arithmetic mean of 20 points was adopted. Details for other measurement conditions, calculation methods, etc. were in accordance with JIS P 8118:2014.

(Measurement of transmitted image clarity of coated product)

The transmitted image clarity of the coated product at an optical comb width of 0.125 mm was measured in accordance with JIS K 7374:2007, using an image clarity meter (manufactured by Suga Test Instruments Co., Ltd., ICM-IDP).

(Measurement of haze of coated product)

The haze of the coated product was measured in accordance with JIS K 7136:2000, using a haze meter (manufactured by MURAKAMI COLOR RESEARCH LABORATORY Co., Ltd.; HM-150).

(Evaluation of particles (number of aggregates))

The coated product having a PET film as a base material was observed with an optical microscope (manufactured by NIKON CORPORATION). The number N of aggregates having a size of 5 μm or more in 1 $mm^2$ (aggregates/$mm^2$) was measured at 20 sites, and the arithmetic mean thereof (N/20) was obtained. The measurement was carried out five times per sample, and the mean value thereof was adopted. The numerical value (aggregates/$mm^2$) is shown in the tables, and the results are evaluated as follows.

There are 3 or more aggregates with a size of 5 μm or more/$mm^2$: x

There are less than 3 aggregates with a size of 5 μm or more/$mm^2$, or there are no such aggregates: ○

It is to be noted that the size of a particle was considered to be an equivalent circle diameter, and that details for measurement conditions, calculation methods, etc. were in accordance with JIS Z 8827-1:2008.

(Production of coating film used in evaluation of strength and Young's modulus)

A coating film was produced in the same manner as that for the test piece produced in "Production of coating film used in evaluation of appearance," with the exception that a PP (polypropylene) film (manufactured by Toray Industries, Inc.; product name: TORAYFAN BO; thickness: 60 $\mu$m) was used.

The produced coating film was detached from the PP film, and was used as a sample for evaluation of strength and Young's modulus.

(Young's modulus of coating film)

The Young's modulus of a test piece was measured in accordance with JIS P 8113:2006, using a tension testing machine "Tensilon" (manufactured by A & D Company, Limited), with the exception that the length of the test piece was set at 80 nm and the distance between chucks was set at 50 mm. Upon the measurement of the Young's modulus, the sample conditioned at 23°C and at a relative humidity of 50% for 24 hours was used as a test piece. The measurement was carried out five times per example, and the mean value thereof was adopted.

(Strength of coating film)

The strength (tensile strength) of a coating film produced using the cellulose fiber-containing composition of the reference example was used as a base strength. The testing machine, test conditions, and standards applied herein were the same as those for the measurement of the above-described Young's modulus. The individual test pieces of Examples and Comparative Examples were tested in the same manner as described above. The test piece whose strength (tensile strength) was increased by 20% or more from the base strength was evaluated as "○," the test piece whose strength (tensile strength) was increased by 10% or more and less than 20% from the base strength was evaluated as "Δ," and the test piece whose strength (tensile strength) was increased by less than 10% from the base strength was evaluated as "x." The measurement was carried out five times per example, and the mean value thereof was adopted.

## Claims

1. A cellulose fiber-containing composition comprising cellulose fibers having a fiber width of 1000 nm or less and water, wherein
the image clarity (comb width: 0.125 mm) of a coating film obtained from the following conditions is 55% or more:
(Conditions)
the cellulose fiber-containing composition, an acrylic resin in an amount of 156 parts by weight based on 1 part by weight of the cellulose fibers, and isocyanate in an amount of 44 parts by weight based on 1 part by weight of the cellulose fibers, are mixed with one another to obtain a coating solution, which is then applied onto a smooth polyethylene terephthalate plate to a thickness of 30 $\mu$m, using an applicator, and immediately after the application of the coating solution, it is dried at 80°C for 30 minutes.

2. The cellulose fiber-containing composition according to claim 1, wherein the image clarity is 65% or more and 98% or less.

3. The cellulose fiber-containing composition according to claim 1 or 2, wherein the total amount of the cellulose fibers and the water is 90% by mass or more based on the amount of the entire composition.

4. The cellulose fiber-containing composition according to any one of claims 1 to 3, wherein when the solid concentration of the cellulose fibers is set at 0.4% by mass, the viscosity measured under conditions of 23°C and a rotation number of 3 rpm is 40,000 mPa·s or less.

5. The cellulose fiber-containing composition according to any one of claims 1 to 4, wherein when the cellulose fibers are processed into a dispersed solution and a supernatant separated from the dispersed solution under the following conditions is recovered, the supernatant yield is 80% by mass or more:
(Conditions)
a dispersed solution of cellulose fibers is adjusted to a solid concentration of 0.2% by mass, and is then centrifuged using a high speed refrigerated centrifuge under conditions of 12000 G for 10 minutes, and thereafter, the obtained supernatant is recovered and the solid concentration of the supernatant is then measured, and the yield of the cellulose fibers is obtained according to the following equation:

supernatant yield (%) = solid concentration (%) in supernatant / 0.2 x 100

6. The cellulose fiber-containing composition according to any one of claims 1 to 5, wherein the Young's modulus of a coating film obtained from the following conditions is 0.7 GPa or more:
(Conditions)
the cellulose fiber-containing composition, an acrylic resin in an amount of 156 parts by weight based on 1 part by weight of the cellulose fibers, and isocyanate in an amount of 44 parts by weight based on 1 part by weight of the cellulose fibers, are mixed with one another to obtain a coating solution, which is then applied onto a smooth polypropylene plate to a thickness of 30 μm, using an applicator, and immediately after the application of the coating solution, it is dried at 80°C for 30 minutes.

7. The cellulose fiber-containing composition according to any one of claims 1 to 6, further comprising an enzyme.

8. The cellulose fiber-containing composition according to any one of claims 1 to 7, which is for use in a paint.

9. The cellulose fiber-containing composition according to any one of claims 1 to 7, which is for use in a thickener.

10. A paint comprising the cellulose fiber-containing composition according to any one of claims 1 to 9.

[Figure 1]

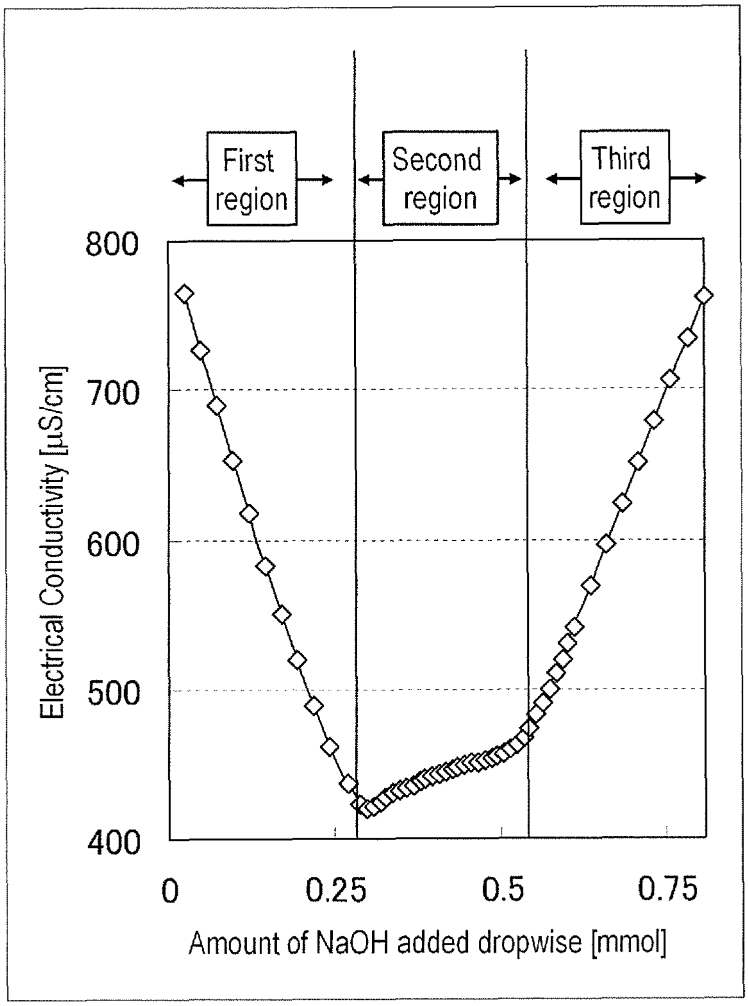
First region
Second region
Third region
800
700
600
500
400
0
0.25
0.5
0.75
Electrical Conductivity [µS/cm]
Amount of NaOH added dropwise [mmol]

[Figure 2]

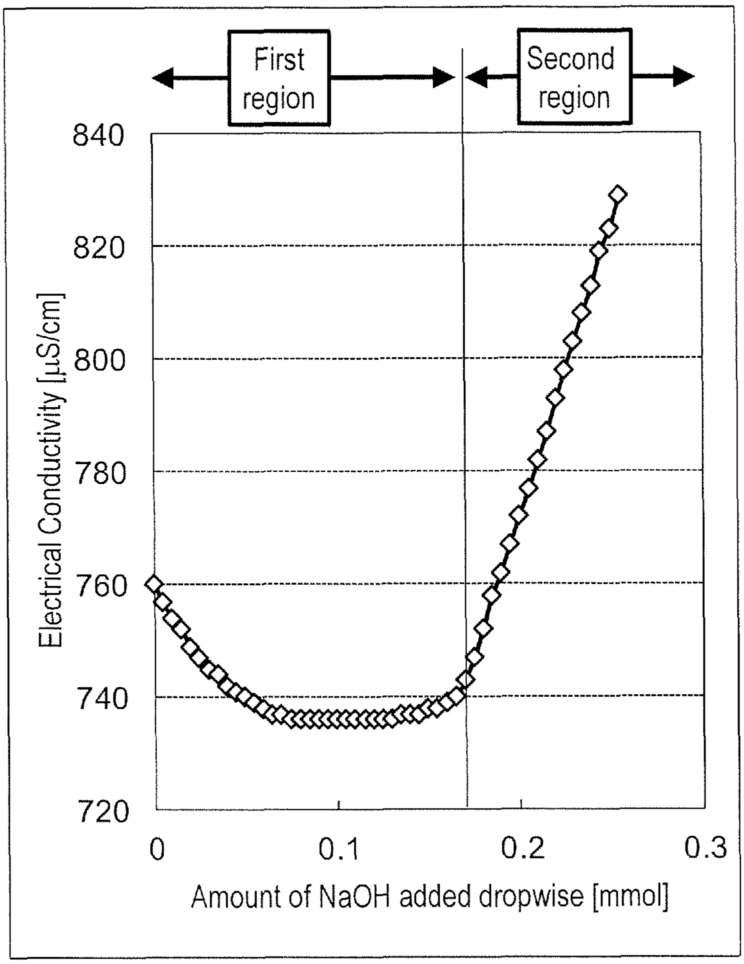
First region
Second region
840
820
800
780
760
740
720
0
0.1
0.2
0.3
Electrical Conductivity [µS/cm]
Amount of NaOH added dropwise [mmol]

## INTERNATIONAL SEARCH REPORT

International application No.
PCT/JP2017/030912

A. CLASSIFICATION OF SUBJECT MATTER
*C09D101/02*(2006.01)i, *C09K3/00*(2006.01)i

According to International Patent Classification (IPC) or to both national classification and IPC

B. FIELDS SEARCHED

Minimum documentation searched (classification system followed by classification symbols)
C09D1/00-201/10, C09K3/00, C08B1/00-37/18, C08K3/00-13/08, C08L1/00-101/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | WO 2017/141800 A1 (Oji Holdings Corp.),<br>24 August 2017 (24.08.2017),<br>claims; paragraphs [0007] to [0008], [0011], [0031]; examples<br>(Family: none) | 1-6,9<br>7<br>8,10 |
| Y | JP 2013-533899 A (Akzo Nobel Chemicals International B.V.),<br>29 August 2013 (29.08.2013),<br>paragraph [0035]<br>& US 2013/0209772 A1<br>paragraph [0035]<br>& WO 2011/147825 A1 & EP 2576902 A1<br>& CN 103025956 A | 7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 September 2017 (13.09.17) | 03 October 2017 (03.10.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

INTERNATIONAL SEARCH REPORT

International application No. PCT/JP2017/030912

C (Continuation). DOCUMENTS CONSIDERED TO BE RELEVANT

| Category* | Citation of document, with indication, where appropriate, of the relevant passages | Relevant to claim No. |
|---|---|---|
| A | JP 2017-106012 A (Oji Holdings Corp.), 15 June 2017 (15.06.2017), claims; examples (Family: none) | 1-10 |
| A | JP 2013-107927 A (Oji Holdings Corp.), 06 June 2013 (06.06.2013), claims; examples (Family: none) | 1-10 |
| A | JP 2014-70158 A (Toppan Printing Co., Ltd.), 21 April 2014 (21.04.2014), claims; examples (Family: none) | 1-10 |
| A | JP 2011-57749 A (Dai-Ichi Kogyo Seiyaku Co., Ltd.), 24 March 2011 (24.03.2011), claims; examples (Family: none) | 1-10 |
| A | JP 2009-67910 A (Asahi Kasei Chemicals Corp.), 02 April 2009 (02.04.2009), claims; examples (Family: none) | 1-10 |
| A | JP 2005-320506 A (Toray Industries, Inc.), 17 November 2005 (17.11.2005), paragraph [0145] & US 2007/0196401 A1 paragraph [0275] & WO 2005/080679 A1 & EP 1743975 A1 & KR 10-2006-0123523 A & CN 1922363 A & CN 102154913 A & KR 10-2011-0096602 A | 1-10 |
| A | JP 2000-178377 A (Asahi Chemical Industry Co., Ltd.), 27 June 2000 (27.06.2000), paragraph [0012] (Family: none) | 1-10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016069618 A
- WO 2011013567 A
- JP 2010023275 A


### Non-patent literature cited in the description


- **SEAGAL et al.** *Textile Research Journal,* 1959, vol. 29, 786
- **KUSHI YOSHINORI.** Bunsan-Zai (Dispersing Agents). *J. Jpn. Soc. Colour Mater.,* 2005, vol. 78 (3), 41-48